(19) Europäisches Patentamt
European Patent Office
Office européen des brevets

(11) EP 4 534 260 A1

(12) **EUROPEAN PATENT APPLICATION**
published in accordance with Art. 153(4) EPC

(43) Date of publication:
**09.04.2025 Bulletin 2025/15**

(51) International Patent Classification (IPC):
**B25J 15/08** (2006.01)

(21) Application number: **22944757.8**

(52) Cooperative Patent Classification (CPC):
**B25J 15/08**

(22) Date of filing: **30.05.2022**

(86) International application number:
**PCT/JP2022/021947**

(87) International publication number:
**WO 2023/233468 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Tohoku University
Sendai-shi, Miyagi 980-8577 (JP)**

(72) Inventors:
• **KATO, Takuya
Sendai-shi, Miyagi 980-8577 (JP)**
• **UNO, Kentaro
Sendai-shi, Miyagi 980-8577 (JP)**

(74) Representative: **Plasseraud IP
104 Rue de Richelieu
CS92104
75080 Paris Cedex 02 (FR)**

(54) **GRIPPING MECHANISM AND ROBOT**

(57) A gripping mechanism of the invention is capable of reliably gripping a recessed portion in addition to a protrusion. The gripping mechanism (100) includes: a plurality of leg portions (110) extending in a longitudinal direction and arranged in a transverse direction intersecting the longitudinal direction; and a support portion (101) supporting each leg portion such that the leg portion is able to reciprocate independently in the longitudinal direction. The leg portion includes a set of divided leg portions (120, 130) that are divided in a front-rear direction intersecting the longitudinal direction and the transverse direction and that are adjacent to each other in the front-rear direction. The support portion includes a transverse moving portion (150) configured to relatively move each set of the divided leg portions in the transverse direction, and a longitudinal biasing portion (170) configured to bias the leg portion in the longitudinal direction.

[FIG. 1]

EP 4 534 260 A1

## Description

### Technical Field

The present invention relates to a gripping mechanism and a robot, and in particular to a technique suitable for use in enabling gripping of an irregular surface.

### Background Art

As a probe used on the ground and in an outer space, PTL 1 discloses a configuration including a leg or an arm and a gripping structure provided at an end portion of the leg or the arm. The gripping structure includes a plurality of claws, a plurality of elastic members having one end portion coupled to one of the plurality of claws and elastically deformable, and a support supporting the plurality of elastic members.

Further, NPL 1 and NPL 2 disclose other examples of the configuration of a gripper.

### Citation List

### Patent Literature

PTL 1: WO2018/173250

### Non Patent Literature

NPL 1: Uno, K., Takada, N., Okawara, T., Haji, K., Candalot, A., Ribeiro, W. F., ... & Yoshida, K. (2021, July). Hubrobo: a lightweight multi-limbed climbing robot for exploration in challenging terrain. In 2020 IEEE-RAS 20th International Conference on Humanoid Robots (Humanoids) (pp. 209-215). IEEE.

NPL 2: Nagaoka, K., Minote, H., Maruya, K., Shirai, Y., Yoshida, K., Hakamada, T., Sawada, H., Kubota, T. (2018, Juanuary) Passive Spine Gripper for Free-Climbing Robot in Extreme Terrain, IEEE Robotics and Automation Letters. IEEE.

### Summary of Invention

### Technical Problem

However, since a gripping structure in the related art can only grip a protruding portion of an object to be gripped having an uneven shape, there was a problem that it was not possible to obtain a reliable grip for various uneven shapes. Further, on uneven ground close to being vertical, an overhanging lower side surface, or the like, there is a problem that a gripping force may be insufficient to obtain a reliable grip for the uneven shape.

The invention has been made in view of the above circumstances, and an object of the invention is to provide a gripping mechanism and a robot capable of reliably gripping a recessed portion in addition to a protruding portion in handling an uneven shape of an irregular surface with a simple configuration.

### Solution to Problem

(1) In order to solve the above problems, a gripping mechanism according to an aspect of the invention is a gripping mechanism that takes an uneven surface having an irregular shape as an object to be gripped, the gripping mechanism including:

a plurality of leg portions extending in a longitudinal direction and arranged in a transverse direction intersecting the longitudinal direction; and

a support portion supporting each leg portion such that the leg portion is able to reciprocate independently in the longitudinal direction, in which

the leg portion includes a set of divided leg portions that are divided in a front-rear direction intersecting the longitudinal direction and the transverse direction and that are adjacent to each other in the front-rear direction, and

the support portion includes

a transverse moving portion configured to relatively move each set of the divided leg portions in the transverse direction, and

a longitudinal biasing portion configured to bias the leg portion in the longitudinal direction.

(2) The gripping mechanism of the invention according to the above (1), in which

the transverse moving portion may relatively move each set of the divided leg portions in the transverse direction by a same distance in the plurality of leg portions.

(3) The gripping mechanism of the invention according to the above (1), in which

the plurality of leg portions arranged in the transverse direction may be arranged in a plurality of rows in the front-rear direction, and

the transverse moving portion may relatively move each row of the divided leg portions by a same distance in the transverse direction.

(4) The gripping mechanism of the invention according to the above (1), in which

the leg portion

may include a contact portion, which is possible to come into contact with an object to be gripped, at a position in the transverse direction at a tip end of the divided leg portion, and

may be provided with a transverse biasing portion configured to bias the contact portion in the transverse direction.

(5) The gripping mechanism of the invention according to the above (1), further including:
a longitudinal position regulation portion configured to regulate a longitudinal position of the leg portion when the divided leg portion is moved relatively in the transverse direction by the transverse moving portion.

(6) A robot according to another aspect of the invention including:

the gripping mechanism according to any one of the above (1) to (5); and
an arm whose tip end is provided with the gripping mechanism.

(1) The gripping mechanism according to an aspect of the invention has the configuration of the above (1).

According to this configuration, the plurality of leg portions supported by the support portion so as to be regulated from moving in the longitudinal direction independently move in the longitudinal direction. Accordingly, in the gripping mechanism positioned facing the uneven surface having an irregular shape, tip ends of the leg portions come to fit the shape of the uneven surface by adapting to the shape of the uneven surface by the biasing member. In this state, the divided leg portions driven by the transverse moving portion move so as to be separated from each other in the transverse direction, so that the tip ends of the plurality of divided leg portions come into contact with a recessed portion or a protrusion of the uneven surface having an irregular shape from the transverse direction.

At this time, the tip ends of the divided leg portions in sets adjacent or not adjacent to each other correspondingly come to sandwich the protrusion of the uneven surface in case of protrusion or press to stretch out the recessed portion of the uneven surface in case of recessed portion. Accordingly, it is possible to grip the uneven surface having an irregular shape with the gripping mechanism.

Further, the divided leg portions driven by the transverse moving portion in the gripping state move so as to return to their original positions in the transverse direction, so that the tip ends of the plurality of divided leg portions are separated from the recessed portion or protrusion of the uneven surface having an irregular shape from the transverse direction. Accordingly, it is possible to release the uneven surface having an irregular shape from the grip of the gripping mechanism. Therefore, it is easy to reliably perform holding of the gripping mechanism to an uneven surface having an irregular shape or support for an object having an uneven surface having an irregular shape by the gripping mechanism and release of the holding and the support.

Moreover, since gripping and release are possible by just moving the divided leg portion in the transverse direction, which is one direction, by the transverse moving portion, only a single drive mechanism is required, and this operation can be implemented at low cost with a simple lightweight configuration and maintaining high operation reliability.

The longitudinal direction, the transverse direction, and the front-rear direction are not limited to an advancing direction of the gripping mechanism or a gravity direction as long as being intersecting with one another.

A configuration of the biasing member is not limited as long as the biasing force can be applied, and various configurations may be adopted.

(2) The gripping mechanism of the invention according to the above (1) has the configuration of the above (2).

According to this configuration, in the plurality of leg portions, the divided leg portions of the respective sets move relatively in the transverse direction by the same distance so that the tip ends of the plurality of divided leg portions come into contact with the recessed portion or the protrusion of the uneven surface having an irregular shape from the transverse direction. At this time, regardless of whether the sets are adjacent to each other or not, the tip ends of the divided leg portions come to sandwich the protrusion of the uneven surface in case of protrusion or press to stretch out the recessed portion of the uneven surface in case of recessed portion correspondingly to the movement distance. That is, in accordance with the movement distance between the tip end of the moved divided leg portion and the tip end of the divided leg portion that is not moved, the tip ends press the uneven surface in contact in the transverse direction. Since all the divided leg portions are supported by the support portion and pressing forces in the transverse direction are opposed to each other, the gripping mechanism can grip the uneven surface having an irregular shape.

Although divided leg portions that are not in contact with the uneven surface in the transverse direction do not contribute to the pressing force for gripping, since a plurality of leg portions are provided, the gripping can be performed even when there are divided leg portions that are not in contact with the uneven surface.

(3) The gripping mechanism of the invention according to the above (1) or (2) has the configuration of the above (3).

According to this configuration, in the leg portions arranged in a plurality of rows in the transverse direction and the front-rear direction, the divided leg portions can be relatively moved in the transverse direction by the same distance in all the sets. Accordingly, in a range in which the leg portions are arranged in a plurality of rows in the transverse direction and the front-rear direction, a large number of leg portions can be brought into contact with the recessed portion or protrusion of the uneven surface having an irregular shape from the transverse direction. Accordingly, it is possible to grip the uneven surface in a wider range in correspondence with the shape of the uneven surface, and thus it is possible to perform more reliable gripping.

(4) The gripping mechanism of the invention according to any one of the above (1) to (3) has the configuration of the above (4).

According to this configuration, when the contact portion at the tip end of the leg portion is brought into contact with the uneven surface having an irregular shape from the transverse direction, a large number of leg portions can be brought into contact with the recessed portion or the protrusion on the uneven surface from the transverse direction in a state where the contact portion is biased by the transverse biasing portion. Accordingly, in accordance with the shape of the uneven surface, it is possible to sandwich the protrusion of the uneven surface by the biased contact portions in case of protrusion and press to stretch out the recessed portion by the biased contact portions in case of recessed portion. Accordingly, it is possible to obtain a grip in accordance with the shape of the uneven surface more accurately, and thus it is possible to obtain a more reliable grip.

The transverse biasing portion may be formed of an elastic member having a plate shape. Alternatively, the transverse biasing portion may be implemented as a configuration in which a tip end portion, which is rotatable around a rotation shaft provided in the divided leg portion and extending in the front-rear direction, is provided and can be biased in the transverse direction by a predetermined actuator or the like. In this case, the actuator can apply a biasing force to each of the leg portions or each of the divided leg portions independently, can apply a biasing force to a plurality of leg portions or divided leg portions collectively, or can apply all the biasing forces equally.

(5) The gripping mechanism of the invention according to any one of the above (1) to (4) has the configuration of the above (5).

According to this configuration, when the divided leg portions move relatively in the transverse direction and a distance of the relative movement is the maximum, the longitudinal position regulation portion regulates the longitudinal position of the leg portion. Accordingly, the leg portions at different longitudinal positions are held so as not to move in the longitudinal direction, and the divided leg portions moved in the transverse direction or the leg portions in the sets of the divided leg portions can maintain the position in the longitudinal direction required in the gripping state. Accordingly, even if a force in the longitudinal direction acts on the leg portion that grips the uneven surface in the gripping state, the state is maintained and the gripping is not released.

Further, by simply moving the divided leg portions so as to reduce the relative distance in the transverse direction, it is possible to release the longitudinal position regulation of the leg portion posed by the longitudinal position regulation portion.

Specifically, a plurality of longitudinal regulation recessed portions may be formed in the longitudinal direction at a position on the front side of the divided leg portion that moves so as to increase the relative distance in the transverse direction, and a longitudinal regulation protrusion corresponding to the longitudinal regulation recessed portion may be formed in the transverse moving portion at a position close to the divided leg portion that does not move. Further, the longitudinal regulation recessed portion and the longitudinal regulation protrusion may be engaged with each other when the divided leg portions move relatively in the transverse direction and the distance of the relative movement is the maximum, and may be disengaged when the relative movement distance of the divided leg portions in the transverse direction is reduced.

(6) The robot according to another aspect of the invention has the configuration of the above (6).

According to this configuration, by repeating the gripping and release of the uneven surface by the gripping mechanism according to any one of the above configurations, a gripping force sufficient to support the own weight of the robot can be presented even on an uneven surface, in particular, uneven ground close to being vertical, an overhanging lower side surface or the like, and a reliable grip can be obtained.

(7) The gripping mechanism of the invention according to any one of the above (1) to (5) may have a configuration in which the leg portion includes a divided longitudinal position maintaining portion that causes the divided leg portions, which are in a set, to be at the same position in the longitudinal direction by the longitudinal biasing portion.

According to this configuration, when the leg portion is biased in the longitudinal direction by the longitudinal biasing portion, the divided leg portions in a set can be maintained at the same position in the longitudinal direction by the divided longitudinal position maintaining portion. Specifically, the divided longitudinal position maintaining portion can ensure that a relative position of the divided leg portions in a set in the longitudinal direction do not change even when the leg portion moves in the longitudinal direction, and that the relative position of the divided leg portions in the longitudinal direction do not change even when the leg portion moves in the transverse direction by the transverse moving portion.

(8) The gripping mechanism of the invention according to any one of the above (1) to (5) and (7) may have a configuration in which the longitudinal biasing portion includes a longitudinal detection unit that detects a position of the leg portion in the longitudinal direction.

According to this configuration, when a plurality of leg portions move in the longitudinal direction independently of each other, the tip ends of the plurality of leg portions come into contact with the uneven surface having an irregular shape and adapt to the uneven shape, and when the longitudinal position is changed in each leg portion, a biasing force corresponding to the shape of the uneven surface is applied to the longitudinal detection unit by the biasing force of the longitudinal biasing portion in each leg portion. The longitudinal detection unit outputs the biasing force and the outputs of the respective leg portions are compared, whereby it is possible to estimate the shape of the uneven surface by using the gripping mechanism as a shaping gauge by only bringing the gripping mechanism into contact with the uneven surface to an extent that the leg portions are longitudinally moved.

That is, with the gripping mechanism, the shape of the uneven surface can be estimated (recognized) by the contact with both the recessed portion and the protrusion, the shape of the uneven surface can be griped through both the recessed portion and the protrusion, and further the estimation and gripping can be performed at the same time. Moreover, the estimation and gripping can be enabled without providing a complicated control mechanism, an optical mechanism for acquiring visual information, or the like.

(9) The gripping mechanism of the invention according to any one of the above (1) to (5), (7) or (8) may have a configuration in which

for an arrangement pitch Px of the leg portions in the transverse direction and a relative movement distance Tx of the divided leg portions in the transverse direction, a value of a ratio Tx/Px is in a range of

$$0 \leq \text{Tx/Px} \leq 0.45 \ (6/13.3).$$

For example,

$$0 \leq \text{Tx} \leq 6 \ \text{mm},$$

and

$$\text{Px} = 13.3 \ \text{mm}.$$

(10) The gripping mechanism of the invention according to any one of the above (1) to (5) and (7) to (9) may have a configuration in which

for a longitudinal movable distance Kz in which the leg portion is movable with respect to the support portion by the longitudinal biasing portion in the longitudinal direction and a support length Wz at which the leg portion is supported by the transverse moving portion in the longitudinal direction, a value of a ratio Kz/Wz is in a range of

$$0 \leq \text{Kz/Wz} \leq 1.77 \ (28.3/16).$$

For example,

$$0 \leq \text{Kz} \leq 28.3 \ \text{mm},$$

and

$$\text{Wz} = 16 \ \text{m}.$$

(11) The gripping mechanism of the invention according to in any one of the above (1) to (5) and (7) to (10) may have a configuration in which

the plurality of leg portions arranged in the transverse direction are arranged in a plurality of rows in the front-rear direction, and
for an arrangement pitch Py of the leg portions in the front-rear direction and a relative movement distance Tx of the divided leg portion in the transverse direction, a value of a ratio Tx/Py is in a range of

$$0 \leq \text{Tx/Py} \leq 0.43 \ (3/7).$$

For example,

$$0 \leq \text{Tx} \leq 6 \ \text{mm},$$

and

$$\text{Py} = 14 \ \text{mm}.$$

(12) The gripping mechanism of the invention according to any one of the above (1) to (5) and (7) to (11) may have a configuration in which

the leg portion

includes a contact portion, which is possible to come into contact with an object to be gripped, at a position in the transverse direction at a tip end of the divided leg portion, and
is provided with a transverse biasing portion configured to bias the contact portion in the transverse direction,

the transverse biasing portion is an elastic plate body, and
for a longitudinal length Fz of the transverse biasing portion and a longitudinal movable distance Kz in which the leg portion is movable with respect to the support portion by the longitudinal biasing portion in the longitudinal direction, a value of a ratio Kz/Fz is in a range of

$$0 \leq Kz/Fz \leq 1.89 \ (28.3/15).$$

For example,

$$0 \leq Kz \leq 28.3 \text{ mm,}$$

and

$$Fz = 15 \text{ mm.}$$

(13) The gripping mechanism of the invention according to any one of the above (1) to (5) and (7) to (12) may have a configuration in which

the leg portion

includes a contact portion, which is possible to come into contact with an object to be gripped, at a position in the transverse direction at a tip end of the divided leg portion, and
is provided with a transverse biasing portion configured to bias the contact portion in the transverse direction,

the transverse biasing portion is an elastic plate body, and
for a longitudinal length Fz of the transverse biasing portion and a relative movement distance Tx of the divided leg portion in the transverse direction, a value of a ratio Tx/Fz is in a range of

$$0 \leq Tx/Fz \leq 0.4 \ (2/5).$$

For example,

$$0 \leq Tx \leq 6 \text{ mm,}$$

and

$$Fz = 15 \text{ mm.}$$

Advantageous Effects of Invention

According to the invention, it is possible to provide a gripping mechanism and a robot capable of gripping not only a protrusion but also a recessed portion on an irregular surface by a simple configuration to enable a reliable grip sufficiently corresponding to the uneven shape.

Brief Description of Drawings

[FIG. 1] FIG. 1 is a schematic diagram illustrating a gripping mechanism according to a first embodiment of the invention, in which (a) is a front view and (b) is a bottom view.
[FIG. 2] FIG. 2 is a schematic diagram illustrating a state in which the gripping mechanism according to the first embodiment of the invention is in contact with an uneven surface, in which (a) is a front view and (b) is a bottom view.
[FIG. 3] FIG. 3 is a schematic diagram illustrating a state in which an uneven surface is gripped by the gripping mechanism according to the first embodiment of the invention, in which (a) is a front view and (b) is a bottom view.
[FIG. 4] FIG. 4 is a bottom view illustrating another example of the gripping mechanism according to the first embodiment of the invention.
[FIG. 5] FIG. 5 is a bottom view illustrating another example of the first embodiment of the gripping mechanism according to the invention.
[FIG. 6] FIG. 6 is a perspective view of a gripping mechanism according to a second embodiment of the invention as viewed from the front.
[FIG. 7] FIG. 7 is a perspective view of the vicinity of a tip end of a leg in the gripping mechanism according to the second embodiment of the invention.
[FIG. 8] FIG. 8 is a perspective view of the vicinity of a support groove of a support portion in the gripping mechanism according to the second embodiment of the invention.
[FIG. 9] FIG. 9 is an exploded view of a divided leg portion of the gripping mechanism according to the second embodiment of the invention as viewed from a front surface and a rear surface.
[FIG. 10] FIG. 10 is a partially see-through perspective view of the vicinity of a longitudinal position regulation portion in the gripping mechanism according to the second embodiment of the invention.
[FIG. 11] FIG. 11 is a perspective view of the vicinity of the tip end of the leg portion in a gripping state of the gripping mechanism according to the second embodiment of the invention.
[FIG. 12] FIG. 12 is a perspective view of the vicinity of the support groove of the support portion in a gripping state of the gripping mechanism according to the second embodiment of the invention.
[FIG. 13] FIG. 13 is a partially see-through perspective view of the vicinity of the longitudinal position regulation portion in a gripping state of the gripping mechanism according to the second embodiment of the invention.
[FIG. 14] FIG. 14 is an exploded view of another example of the divided leg portion in the gripping mechanism according to the second embodiment of the invention as viewed from a front surface and a rear surface.
[FIG. 15] FIG. 15 is a schematic diagram illustrating a third embodiment of a robot including a gripping mechanism according to the invention.
[FIG. 16] FIG. 16 is a diagram illustrating dimensions corresponding to the gripping mechanism of the second embodiment, as an example of the invention.
[FIG. 17] FIG. 17 is a diagram illustrating dimensions corresponding to the gripping mechanism of the second embodiment, as an example of the invention.
[FIG. 18] FIG. 18 is a diagram illustrating dimensions corresponding to the gripping mechanism of the second embodiment, as an example of the invention.

Description of Embodiments

Hereinafter, a first embodiment of a gripping mechanism according to the invention will be described with reference to the drawings.

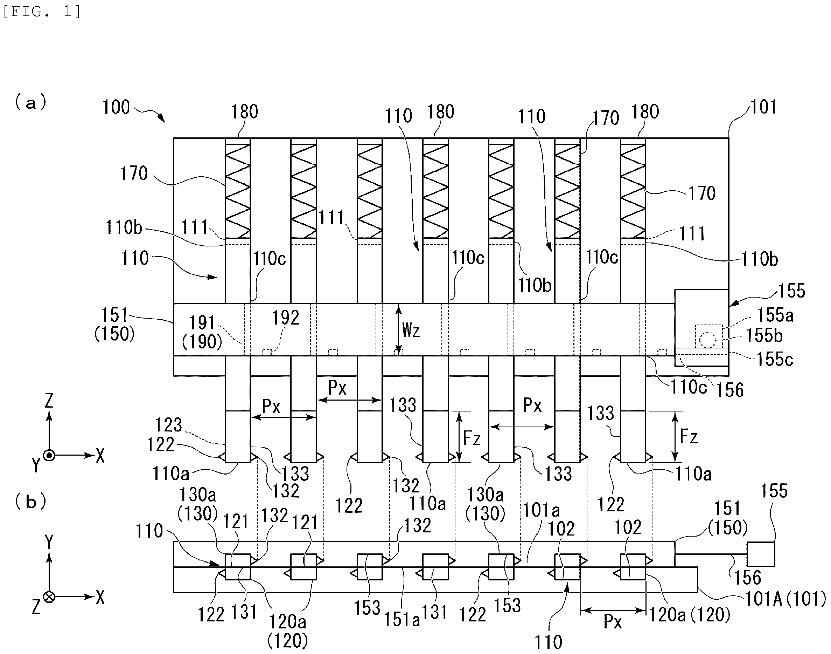

FIG. 1 is a schematic diagram illustrating a gripping mechanism according to the embodiment. In the drawing, a reference numeral 100 denotes the gripping mechanism.

In the following description, a longitudinal direction in which a leg portion extends is defined as a Z direction, and a transverse direction orthogonal to the Z direction is defined as an X direction. A front-rear direction orthogonal to the X direction and the Z direction is defined as a Y direction. The X direction, the Y direction, and the Z direction are used in the description of the gripping mechanism, and have different implication from a longitudinal direction and a horizontal direction corresponding to gravity with respect to an uneven surface to be griped by the gripping mechanism. The X direction, the Y direction, and the Z direction may not coincide with the longitudinal direction or the horizontal direction.

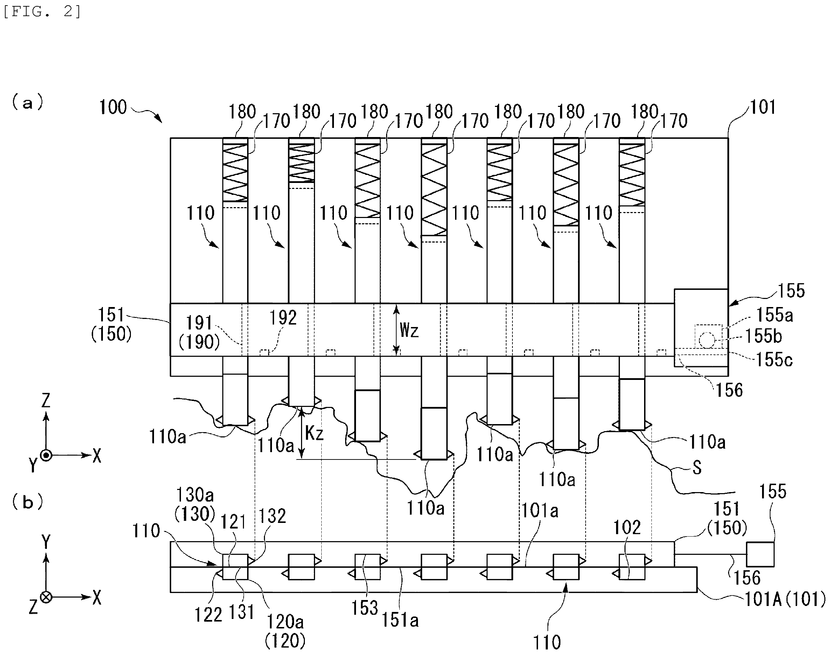

The gripping mechanism 100 according to the embodiment takes an uneven surface S (see FIG. 2) having an irregular shape as an object to be gripped.

As illustrated in FIG. 1, the gripping mechanism 100 according to the embodiment includes a frame portion (support portion) 101, a plurality of leg portions 110 supported by the frame portion 101, a transverse moving portion 150, a longitudinal biasing portion 170, and a longitudinal detection unit 180.

Each of the plurality of leg portions 110 extends in the Z direction. The plurality of leg portions 110 are separated from one another in the X direction. A separation distance (arrangement pitch) Px of the plurality of leg portions 110 in the X direction is equal between any adjacent leg portions 110. The plurality of leg portions 110 are arranged parallel to one another.

Since the plurality of leg portions 110 have the same structure, one leg portion 110 will be described hereinafter.

The leg portion 110 is rod-shaped having a substantially rectangular cross section. The leg portion 110 extends in the longitudinal direction (Z direction). A tip end 110a of the leg portion 110 in the longitudinal direction (Z direction) is positioned outside the frame portion 101. In the plurality of leg portions 110, the tip ends 110a protrude outward by the same length from the frame portion 101 in a state where the gripping mechanism 100 is not in contact with the uneven surface S.

As illustrated in (b) of FIG. 1, the leg portion 110 is longitudinally divided into two in the front-rear direction (Y direction) and includes a set of a static divided leg portion (divided leg portion) 120 and a dynamic divided leg portion (divided leg portion) 130. The static divided leg portion (divided leg portion) 120 and the dynamic divided leg portion (divided leg portion) 130 have substantially the same rectangular cross section on an XY plane, and are not limited to this shape. The static divided leg portion 120 and the dynamic divided leg portion 130 have substantially the same rectangular shape as viewed in the Y direction, and are not limited to this shape. The static divided leg portion 120 and the dynamic divided leg portion 130 are arranged adjacent to each other in the Y direction.

A surface of the static divided leg portion 120 and a surface of the dynamic divided leg portion 130 facing each other are defined as divided sliding surfaces 121 and 131, respectively, and are slidable in the transverse direction (X direction). The divided sliding surfaces 121 and 131 are arranged along an XZ plane.

Here, as will be described later, "static" and "dynamic" are adopted in names of the divided leg portions 120 and 130 for distinction whether the divided leg portion is driven in the X direction, and have no other special meanings.

Further, a configuration may be implemented in which the static divided leg portion 120 and the dynamic divided leg portion 130 are driven simultaneously in the X direction. In this case, similar to the transverse moving portion 150 for the dynamic divided leg portion 130, a configuration for driving like the transverse moving portion can be provided for the static divided leg portion 120. In this case, it is possible to separately drive the static divided leg portion 120 and the dynamic divided leg portion 130 and to simultaneously drive the static divided leg portion 120 and the dynamic divided leg portion 130.

In a case of simultaneously driving the static divided leg portion 120 and the dynamic divided leg portion 130, it is preferable to provide a mechanism capable of driving the static divided leg portion 120 and the dynamic divided leg portion 130 to separate from each other simultaneously in the X direction or driving the static divided leg portion 120 and the dynamic divided leg portion 130 to approach each other simultaneously in the X direction. Further, in the case of simultaneously driving the static divided leg portion 120 and the dynamic divided leg portion 130, a configuration is preferably implemented in which operations of the static divided leg portion 120 and the dynamic divided leg portion 130 are synchronized.

A static contact portion 122 is formed at a position in the X direction of a peripheral side surface of a tip end 120a of the static divided leg portion 120. The static contact portion 122 may protrude in the X direction from the peripheral side surface of the tip end 120a of the static divided leg portion 120. The static contact portion 122 can come into contact with the object to be gripped. The shape, material, hardness, elasticity, and the like of the static contact portion 122 can be selected according to characteristics of the object to be gripped.

For example, when the object to be griped is a hard uneven surface of a rock or the like, it is possible to form the static contact portion 122 as a pin (needle) that is made of metal and has a pointed tip end for contact.

Alternatively, when the object to be griped is a material having flexibility or having resilience and elasticity, the static contact portion 122 can be made of a material having elasticity such as silicone resin and can be deformed according to the shape of the object to be griped. In this case, a portion of the static contact portion 122 facing the object to be griped may have a flat surface portion, may be a spherical surface whose center is protruding toward the object to be griped or a curved surface or conical surface equivalent to the spherical surface, or may be a spherical surface whose center is recessed against the object to be gripped or a curved surface, conical surface or a recess having a flat bottom surface equivalent to the spherical surface.

Further, when the object to be griped is a rock or the like, a metal needle or the like can be used as the material of the static contact portion 122. Alternatively, a silicone resin or the like can be used as the material of the static contact portion 122 depending on the various materials of the object to be griped, such as metal, plastic, and rubber.

A dynamic contact portion 132 is formed at a position in the X direction of a peripheral side surface of a tip end 130a of the dynamic divided leg portion 130. The dynamic contact portion 132 may protrude in the X direction from the peripheral side surface of the tip end 130a of the dynamic divided leg portion 130. The dynamic contact portion 132 can come into contact with the object to be gripped. The shape, material, hardness, elasticity, and the like of the dynamic contact portion 132 can be selected according to the characteristics of the object to be gripped.

Similarly to the above-described static contact portion 122, the dynamic contact portion 132 can also adopt various configurations. As will be described later, the dynamic contact portion 132 is provided at a position on the front side in a moving direction of the dynamic divided leg portion 130 when being driven in the X direction so that the static divided leg portion 120 and the dynamic divided leg portion 130 are separated from each other.

The dynamic contact portion 132 and the static contact portion 122 have substantially the same configuration, and protruding directions thereof are opposite to each other in the X direction. Here, the protrusion means extending in a direction away from an axis in the Z direction of the static divided leg portion 120 and the dynamic divided leg portion 130.

The dynamic contact portion 132 and the static contact portion 122 are formed at the same position in the Z direction. This is to achieve a state where reaction forces are close to being on the same straight line as much as possible when the dynamic contact portion 132 and the static contact portion 122 press the object to be griped, as will be described later. Depending on an uneven shape of the object to be gripped, a configuration in which the dynamic contact portion 132 and the static contact portion 122 are close to the tip ends 130a and 120a as much as possible in the Z direction may be preferred and a configuration in which the dynamic contact portion 132 and the static contact portion 122 are separated from the tip ends 130a and 120a by a predetermined Z-direction length may be preferred.

The dynamic contact portion 132 and the static contact portion 122 are formed in point-symmetry with respect to a center of the leg portion 110 with respect to the divided sliding surfaces 121 and 131, that is, at positions at substantially the same separation distance from the divided sliding surfaces 121 and 131 in opposite directions in the Y direction.

The dynamic contact portion 132 and the static contact portion 122 are separated from each other in the X direction by the same amount as an X direction dimension of each of the tip end 120a of the static divided leg portion 120 and the tip end 130a of the dynamic divided leg portion 130.

The dynamic contact portion 132 and the static contact portion 122 are biased in the transverse direction by a transverse biasing portion 133 and a transverse biasing portion 123, respectively.

The transverse biasing portion 133 and the transverse biasing portion 123 can be implemented by an elastic member having a predetermined Z-direction length Fz from the tip end 130a and the tip end 120a toward a base end 110b of the leg portion 110.

The transverse biasing portion 133 absorbs displacement of the dynamic contact portion 132 in the X direction when the dynamic contact portion 132 comes into contact with the uneven surface S that is an object to be gripped. At the same time, the transverse biasing portion 133 allows the dynamic contact portion 132 to press the uneven surface S in the X direction to an extent that the uneven surface S can be gripped.

Similarly to the dynamic contact portion 132, in the case of the static contact portion 122, the transverse biasing portion 123 also absorbs displacement of the static contact portion 122 in the X direction when the static contact portion 122 comes into contact with the uneven surface S that is an object to be gripped. At the same time, the transverse biasing portion 123 allows the static contact portion 122 to press the uneven surface S in the X direction to an extent that the uneven surface S can be gripped.

The transverse biasing portion 133 and the transverse biasing portion 123 may be formed to be thinner than a thickness (X-direction width dimension) of a position close to the base end 110b of the leg portion 110, differently from an X-direction width dimension illustrated in the drawings.

Further, the transverse biasing portion 133 and the transverse biasing portion 123 are not limited to this configuration as long as the transverse biasing portion 133 and the transverse biasing portion 123 can bias the dynamic contact portion 132 and the static contact portion 122 in the X direction.

Positions of the static divided leg portion 120 and the dynamic divided leg portion 130 in the Z direction are restricted by a divided longitudinal position maintaining portion 111. The divided longitudinal position maintaining portion 111 can be, for example, a step that extends in the X direction and is formed corresponding to each of the divided sliding surfaces 121 and 131 close to the base end 110b of the leg portion 110. Alternatively, the divided longitudinal position maintaining portion 111 may be formed as a pair of a groove and a projection on the divided sliding surfaces 121 and 131, respectively, that extend in the X direction and engage with each other.

By maintaining a state in which the divided longitudinal position maintaining portions 111 engage with each other, the positions of the static divided leg portion 120 and the dynamic divided leg portion 130 in the Z direction are maintained in a state where a relative position thereof can be changed in the X direction.

Accordingly, even when a Z direction position of the leg portion 110 is changed, a state can be maintained where the static divided leg portion 120 and the dynamic divided leg portion 130 in a pair are not displaced in the Z direction.

When a step extending in the X direction is formed as the divided longitudinal position maintaining portion 111, it is possible to further provide a step extending in the X direction formed correspondingly to each of the divided sliding surfaces 121 and 131 close to the tip end 110a of the leg portion 110.

Alternatively, when the divided longitudinal position maintaining portion 111 is formed as a pair of a groove and a projection on the divided sliding surfaces 121 and 131, respectively, that extend in the X direction and engage with each other, the number of pairs of grooves and projections can be multiple. Here, for the groove and the projection, formation on which of the divided sliding surfaces 121 and 131 is not limited.

Each of the plurality of leg portions 110 is supported by the frame portion (support portion) 101 at a middle portion 110c that is at the middle in the Z direction. In a fixed frame portion 101A of the frame portion 101, a plurality of static frame grooves (support grooves) 102 extending in the Z direction are formed on a sliding surface 101a extending along a ZX plane. The sliding surface 101a extends in the X direction and has a predetermined length W1z in the Z direction.

The static frame grooves 102 are formed so as to be parallel to each other at positions separated in the X direction, corresponding to the number of the leg portions 110. The static frame groove 102 has a length W1z in the Z direction equal to the length (width dimension) W1z of the sliding surface 101a in the Z direction. The lengths W1z of the plurality of static frame grooves 102 in the Z direction are all equal.

A distance at which the plurality of static frame grooves 102 are separated from each other in the X direction, that is, an arrangement interval of the static frame grooves 102 is equal to an arrangement pitch Px of the leg portions 110.

The static frame grooves 102 accommodate the static divided leg portions 120 of the leg portions 110, respectively. The static divided leg portion 120 accommodated in the static frame groove 102 is movable in the Z direction, and movements thereof in the X direction and Y direction are restricted by the shape of the static frame groove 102. A depth of the static frame groove 102 in the Y direction is equal to a thickness dimension of the static divided leg portion 120 in the Y direction at the middle portion 110c. At this time, the divided sliding surface 121 is flush with the sliding surface 101a.

A sliding surface 151a of a transverse moving frame portion 151 is in contact with the sliding surface 101a of the fixed frame portion 101A.

The transverse moving frame portion 151 constitutes a support portion. The transverse moving frame portion 151 extends in the X direction. The transverse moving frame portion 151 has a substantially rectangular cross-sectional shape along a YZ plane. The transverse moving frame portion 151 can reciprocate in the X direction with respect to the fixed frame portion 101A. The transverse moving frame portion 151 does not move in the Y direction or the z direction with respect to the frame portion 101.

The transverse moving frame portion 151 has a length (width dimension) Wz in the Z direction that is equal to or slightly smaller than the length (width dimension) W1z of the sliding surface 101a in the Z direction. A plurality of dynamic frame grooves 153 extending in the Z direction are formed on the sliding surface 151a of the transverse moving frame portion 151, correspondingly to the static frame grooves 102 of the sliding surface 101a. Similarly to the sliding surface 101a, the sliding surface 151a extends in the X direction and has a predetermined length Wz in the Z direction.

Similarly to the static frame grooves 102, the dynamic frame grooves 153 are formed so as to be parallel to each other at positions separated in the X direction, corresponding to the number of the leg portions 110. The dynamic frame groove (support groove) 153 has a length Wz in the Z direction equal to the length (width dimension) Wz of the sliding surface 151a in the Z direction. The lengths Wz of the plurality of dynamic frame grooves 153 in the Z direction are all equal.

A distance at which the plurality of dynamic frame grooves 153 are separated from each other in the X direction, that is, an arrangement interval of the dynamic frame grooves 153 is equal to the arrangement pitch Px of the leg portions 110.

The dynamic frame grooves 153 accommodate the dynamic divided leg portions 130 of the leg portions 110, respectively. The dynamic divided leg portion 130 accommodated in the dynamic frame groove 153 is movable in the Z direction, and movements thereof in the X direction and Y direction are restricted by the shape of the dynamic frame groove 153. A depth of the dynamic frame groove 153 in the Y direction is equal to a thickness dimension of the dynamic divided leg portion 130 in the Y direction at the middle portion 110c. At this time, the divided sliding surface 131 is flush with the sliding surface 151a.

The transverse moving frame portion 151 constitutes the transverse moving portion 150.

The transverse moving portion 150 can reciprocate the plurality of dynamic divided leg portions 130 in the X direction. The transverse moving portion 150 includes the transverse moving frame portion 151, a transverse movement drive unit 155 that reciprocates the transverse moving frame portion 151 in the X direction, and a connection portion 156 that connects the transverse moving frame portion 151 and the transverse movement drive unit 155. The transverse movement drive unit 155 includes a motor 155a serving as a drive source, a pinion 155b rotated by the motor 155a, and a rack 155c meshing with the pinion 155b and capable of reciprocating in the X direction. The rack 155c can be integrated with the connection portion 156.

The transverse moving portion 150 rotates the pinion 155b by driving of the drive source 155a such as a motor in the transverse movement drive unit 155, and operates the rack 155c in the X direction, which meshes with the opinion 155b, by the rotation of the pinion 155b. By the operation of the rack 155c in the X direction, the transverse moving frame portion 151 integrally connected to the rack 155c and the connection portion 156 can reciprocate in the X direction in a reciprocating manner.

Along with the reciprocating operation of the transverse moving frame portion 151 in the X direction, the plurality of dynamic divided leg portions 130 accommodated in the dynamic frame grooves 153 reciprocate in the X direction integrally with the transverse moving frame portion 151. At this time, the plurality of dynamic divided leg portions 130 can perform the same movement in the X direction. In addition, in the movement of the transverse moving frame portion 151 in the X direction, it is possible to maintain a state in which the operation of the dynamic divided leg portion 130 in the Z direction and the Y direction is not affected.

Further, before the dynamic divided leg portion 130 moves in the X direction, the dynamic frame groove 153 and the static frame groove 102 are aligned in a manner of overlapping each other as viewed in the Y direction. Accordingly, before the dynamic divided leg portion 130 moves in the X direction, the divided sliding surface 131 is in contact with only the divided sliding surface 121. Before the dynamic divided leg portion 130 moves in the X direction, the sliding surface 151a is in contact with only the sliding surface 101a.

When the dynamic divided leg portion 130 moves in the X direction, the divided sliding surface 131 comes into contact with the divided sliding surface 121 and the sliding surface 101a. Similarly, before the dynamic divided leg portion 130 moves in the X direction, the divided sliding surface 121 is in contact with only the divided sliding surface 131. When the dynamic divided leg portion 130 moves in the X direction, the divided sliding surface 121 comes into contact with the divided sliding surface 131 and the sliding surface 151a.

At this time, since the divided sliding surface 131 is flush with the sliding surface 151a and the divided sliding surface 121 is flush with the sliding surface 101a, the movement of the divided sliding surface 131 and divided sliding surface 121 in the X direction is not hindered by the sliding surface 151a and the sliding surface 101a.

The longitudinal biasing portion 170 is disposed in contact with the base end 110b of the leg portion 110.

The longitudinal biasing portion 170 biases the leg portion 110 in the Z direction. Each longitudinal biasing portion 170 biases the corresponding leg portions 110 independently. The longitudinal biasing portion 170 may be implemented by an elastic member such as a spring disposed between the frame portion 101 and the base end 110b of the leg portion 110. A longitudinal movable distance Kz in the Z direction of the leg portion 110 based on expansion and contraction of the longitudinal biasing portion 170 can be set (see FIG. 2).

Further, the longitudinal detection unit 180 is disposed between the longitudinal biasing portion 170 and the frame portion 101. The longitudinal detection unit 180 is, for example, a pressure sensor. In this case, the pressure sensor can detect a pressing force, by which the longitudinal biasing portion 170 presses the longitudinal detection unit 180, in response to a change in a Z-direction position of the base end 110b of the leg portion 110.

The Z-direction position of the leg portion 110 can be changed by a biasing force of the longitudinal biasing portion 170. When the tip end 110a of the leg portion 110 comes into contact with the object to be gripped such as the uneven surface S, the leg portion 110 is displaced in the Z direction corresponding to the uneven shape thereof. At this time, since the tip end 110a is biased by the biasing force of the longitudinal biasing portion 170 toward the object to be gripped, a Z-direction position of the tip end 110a follows a Z-direction position of the object to be gripped such as the uneven surface S. Accordingly, the base end 110b of the leg portion 110 follows the Z-direction position corresponding to the Z-direction position of the object to be gripped such as the uneven surface S.

The biasing force of the longitudinal biasing portion 170 increases or decreases in accordance with the Z-direction position of the leg portion 110. That is, in a case where the Z-direction position of the tip end 110a is closer to the transverse moving frame portion 151 in the Z direction than when the tip end 110a is spaced apart from the transverse moving frame portion 151 in the Z direction, the biasing force of the longitudinal biasing portion 170 is larger. Similarly, in a case where the Z-direction position of the base end 110b is closer to the transverse moving frame portion 151 in the Z direction than when the tip end 110b is spaced apart from the transverse moving frame portion 151 in the Z direction, the biasing force of the longitudinal biasing portion 170 is smaller.

In response to the increase or decrease in the biasing force of the longitudinal biasing portion 170, an output from the longitudinal detection unit 180 varies. By comparing the outputs collectively and referring to the position of the corresponding leg portion 110 in the XY plane, it is possible to estimate distribution of a shape of the object to be gripped in the Z direction in the XY plane, that is, the uneven shape when the object to be gripped such as the uneven surface S is in contact with the tip end 110a.

The longitudinal biasing portion 170 may be configured to be in contact with only the static divided leg portion 120 at a position in contact with the base end 110b of the leg portion 110. In this case, even when the longitudinal biasing portion 170 biases the static divided leg portion 120 in the Z direction, the dynamic divided leg portion 130 can freely move in the X direction without being affected by the biasing force of the longitudinal biasing portion 170. Therefore, at the base end 110b of the leg portion 110, a contour shape presented by end portions 120b of the static divided leg portions 120 along the XY plane can have a contour shape presented by the end portions 120b, which coincides with or larger than an end portion shape presented by the longitudinal biasing portions 170 along the XY plane.

The longitudinal biasing portion 170 is not limited to the above-described configuration as long as the longitudinal biasing portion 170 can bias the leg portion 110 in the Z direction.

For example, a predetermined actuator that operates on a drive source such as a hydraulic pressure, an air pressure, or a motor may be employed as the longitudinal biasing portion 170. In this case, it is possible to adopt a configuration in which Z-direction position control can be separately performed in the individual leg portions 110.

Further, the longitudinal detection unit 180 is not limited to the pressure sensor as long as the output can vary in accordance with the change in the Z-direction position of the leg portion 110. When a predetermined actuator is adopted as the longitudinal biasing portion 170, it is possible to adopt a configuration in which the change in the Z-direction position of the leg portion 110 is detected by the operation of the actuator.

The gripping mechanism 100 may include a longitudinal position regulation portion 190.

Although not illustrated in detail in the embodiment, the longitudinal position regulation portion 190 regulates a longitudinal position of the leg portion 110 when the dynamic divided leg portion 130 moves relative to the static divided leg portion 120 in the X direction by the transverse moving portion 150.

Specifically, as the longitudinal position regulation portion 190, a plurality of longitudinal regulation recessed portion 191 recessed in the X direction are formed side by side in the Z direction at a Z-direction position corresponding to the middle portion 110c of the dynamic divided leg portion 130, which is also a position on the front side of the dynamic divided leg portions 130 that move relatively in a shifted manner in the X direction. At the same time, a longitudinal regulation protrusion 192 can be formed in the fixed frame portion 101A that is in the vicinity of an opening position of the static frame groove 102 that is close to the tip end 110a. The longitudinal regulation protrusion 192 protrudes in the X direction toward the dynamic divided leg portion 130 at a position closer to the transverse moving frame portion 151 than the sliding surface 101a and can correspond to the longitudinal regulation recessed portion 191.

The longitudinal regulation protrusion 192 is inserted into any one of the plurality of longitudinal regulation recessed portions 191 according to the Z-direction position of the leg portion 110 when the dynamic divided leg portion 130 moves in the X direction. Accordingly, the longitudinal regulation recessed portion 191 and the longitudinal regulation protrusion 192 are engaged with each other, and the Z-direction position of the dynamic divided leg portion 130 is regulated with respect to the frame portion 101. In this state, as viewed in the Y direction, the leg portion 110 does not move in the Z direction until the dynamic divided leg portion 130 returns to its original position in the X direction so as to align with the static divided leg portion 120.

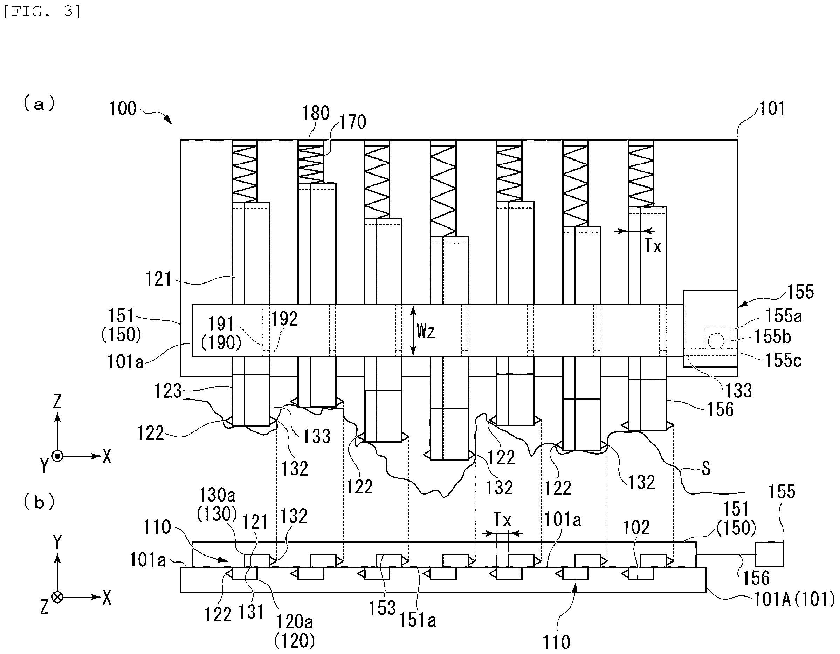

In the longitudinal position regulation portion 190, both an X-direction depth of the plurality of longitudinal regulation recessed portions 191 and an X-direction protrusion dimension of the longitudinal regulation protrusion 192 correspond to a relative movement distance Tx in the X direction between the dynamic divided leg portion 130 and the static divided leg portion 120. That is, the shapes of the plurality of longitudinal regulation recessed portions 191 and the longitudinal regulation protrusion 192 can be configured such that when the dynamic divided leg portion 130 moves in the X direction with respect to the static divided leg portion 120 and a movement distance thereof is the maximum relative movement distance Tx, the mutual engagement is established, and when the relative movement distance between the dynamic divided leg portion 130 and the static divided leg portion 120 in the X direction is decreased by a predetermined amount from the relative movement distance Tx, the engagement is released (referring to FIG. 3).

In addition to the above configuration, the longitudinal position regulation portion 190 may be formed of a material having a large friction such as a rubber pad, and the regulation can be achieved by a frictional force generated when pressing against the uneven surface S.

Hereinafter, an operation of the gripping mechanism 100 according to the embodiment will be described.

FIG. 2 is a schematic diagram illustrating a state in which the gripping mechanism according to the embodiment is in contact with an uneven surface. FIG. 3 is a schematic diagram illustrating a state in which an uneven surface is gripped by the gripping mechanism according to the embodiment.

In the gripping mechanism 100 according to the embodiment, in a state before coming into contact with the uneven surface S as an object to be gripped, the Z-direction positions of all the leg portions 110 are the same with respect to the frame portion 101 as illustrated in (a) of FIG. 1. That is, the tip ends 110a of all the leg portions 110 are separated from the transverse moving frame portion 151 in the Z direction at the same distance. At this time, each leg portion 110 is biased by the longitudinal biasing portion 170 in a direction away from the transverse moving frame portion 151 in the Z direction.

In all the leg portions 110, the static divided leg portion 120 and the dynamic divided leg portion 130 are located at positions overlapping each other as viewed in the Y direction. That is, the static frame groove 102 and the dynamic frame groove 153 in the X direction overlap each other as viewed in the Y direction. As illustrated in (b) of FIG. 1, in the transverse moving frame portion 151 facing the fixed frame portion 101A, an opening of the static frame groove 102 in the sliding surface 101a and an opening of the dynamic frame groove 153 in the sliding surface 151a align with each other and edge portions thereof are in contact with each other. That is, X-direction positions of the opening of the static frame groove 102 and the opening of the dynamic frame groove 153 coincide with each other.

In this state, the gripping mechanism 100 is brought close to the uneven surface S. At this time, for example, the gripping mechanism 100 can be brought close to the uneven surface S along the Z direction. That is, the gripping mechanism 100 is brought close to the uneven surface S in the Z direction along the leg portion 110. This is because the uneven surface S has an irregular shape, and therefore the gripping mechanism 100 is brought close to the uneven surface S such that the axis of the leg portion 110 is not displaced, without taking into consideration the shape of the uneven surface S.

It is preferable to bring the gripping mechanism 100 close to the uneven surface S in a state where the frame portion 101 is held and a thrust force is applied to the frame portion 101.

As a Z-direction distance between the frame portion 101 and the uneven surface S decreases, the tip end 110a of the leg portion 110 comes into contact with the uneven surface S. At this time, although the time varies depending on a Z-direction shape of the uneven surface S at the position along the XY plane, in each of the leg portions 110, the tip end 110a of the leg portion 110 comes into contact with the uneven surface S in the order of a Z-direction distance between the tip end 110a and the uneven surface S decreasing.

For the leg portion 110 whose tip end 110a comes into contact with the uneven surface S, the leg portion 110 moves toward the inside of the frame portion 101 as the Z-direction distance between the frame portion 101 and the uneven surface S decreases. That is, in accordance with the decrease in the Z-direction distance between the frame portion 101 and the uneven surface S, the leg portion 110 relatively moves in the Z direction such that the tip end 110a comes close to the transverse moving frame portion 151. Although there is a difference in time due to the position along the XY plane, the leg portion 110 whose tip end 110a is in contact with the uneven surface S moves in the Z direction relatively.

Here, the leg portion 110 is accommodated inside a columnar space extending in the Z direction, which is formed by the static frame groove 102 and the dynamic frame groove 153. That is, the static divided leg portion 120 is accommodated inside the static frame groove 102, and the dynamic divided leg portion 130 is accommodated inside the dynamic frame groove 153. Further, opening edge portions of the static frame groove 102 and the dynamic frame groove 153 on the sliding surfaces 101a and 151a are in contact with each other and are aligned with each other in the X direction.

Therefore, the leg portion 110 is regulated from moving in the X direction and the Y direction and moves only in the Z direction.

When the leg portion 110 moves in the Z direction, the longitudinal biasing portion 170 is pressed in the Z direction. The longitudinal biasing portion 170 presses the longitudinal detection unit 180 in the Z direction. At this time, a Z-direction length of the longitudinal biasing portion 170 varies according to the magnitude of a Z-direction movement distance of the leg portion 110. Accordingly, the pressing force applied to the longitudinal detection unit 180 increases or decreases. That is, the pressing force applied to the longitudinal detection unit 180 increases or decreases according to the magnitude of the Z-direction movement distance of the leg portion 110. The longitudinal detection unit 180 as a press sensor outputs a detection result. At this time, it is preferable that information on the position along the XY plane of the leg portion 110 corresponding to the output can be determined simultaneously.

When the Z-direction distance between the frame portion 101 and the uneven surface S decreases to a predetermined value, the approaching movement is stopped. This state is illustrated in FIG. 2. In order to perform a gripping operation of the gripping mechanism 100, it is preferable that the tip ends 110a of all the leg portions 110 are in contact with the uneven surface S when the approaching movement is stopped. But it is conceivable that there is a leg portion 110 whose tip end 110a is not in contact with the uneven surface S depending on the uneven shape of the uneven surface S.

In stopping the approaching movement of the gripping mechanism 100, it is possible to adopt a condition that there is a leg portion 110 that is moved in the Z direction to have a minimal expansion and contraction length of the longitudinal biasing portion 170. In other words, in stopping the approaching movement of the gripping mechanism 100, it is possible to adopt a condition that there is a leg portion 110 of which the Z-direction movement distance is equal to the longitudinal movable distance Kz. In this case, the stop of the approaching movement can be achieved by adopting a condition that an output value from the longitudinal detection unit 180 exceeds a predetermined set value.

Alternatively, a state in which a sum of the biasing forces of all the longitudinal biasing portions 170 expanding and contracting according to the Z-direction position of the uneven surface along the XY plane and an own weight of the gripping mechanism 100 are balanced with each other may be adopted as a condition for stopping the approaching movement of the gripping mechanism 100. In this case, the frame portion 101 needs to be positioned higher in a gravity direction than the uneven surface S such that the leg portion 110 is retracted into the frame portion 101 by the own weight of the gripping mechanism 100. It is preferable that an approach drive actuator such as an arm capable of applying a pressing force, which acts similarly to the gravity in a direction in which the gripping mechanism 100 approaches the uneven surface S, to the frame portion 101 is connected.

Further, as a condition for stopping the approaching movement of the gripping mechanism 100, a distance measuring mechanism capable of measuring an approach distance to the uneven surface S to be gripped may be provided at a position facing the uneven surface S to be gripped in the frame portion 101, and it is possible to stop the approach of the gripping mechanism 100 based on a measurement result. In this case, as the distance measuring mechanism, a distance measuring instrument using a sound wave, laser, or the like can be used as the measuring means.

Alternatively, as the distance measuring mechanism, a depth camera (camera with a depth measurement sensor such as stereo or ToF capable of visualizing, in a camera image, information on a distance to an object) can also be used.

In FIG. 2, the leg portion 110 located at the center in a left-right direction is in a state where the tip end 110a thereof is not in contact with the uneven surface S. In (a) of FIG. 2, in the second leg portion 110 from the left, a Z-direction dimension of the longitudinal biasing portion 170 is the smallest. Therefore, a difference in the Z-direction position of the tip end 110a between the two leg portions 110 is equal to a longitudinal movable range Kz.

The longitudinal movable range Kz is set so as to maintain the following relationship with a support length Wz that is a Z-direction dimension of the dynamic frame groove 153. This setting can be set based on a Z-direction dimension Wz of the transverse moving frame portion 151.

For the longitudinal movable range Kz and the support length Wz, a value of a ratio Kz/Wz can be in a range of

$$0 \le Kz/Wz \le 1.77 \ (28.3/16).$$

Here, it is possible to set to

$$0 \le Kz \le 28.3 \ mm,$$

and

$$Wz = 16 \ mm.$$

This range is an example of a case where the gripping mechanism is applied as a gripping mechanism provided at an arm tip end of a lunar surface exploration robot as will be described later. Other ranges are also possible depending on the uneven shape of the uneven surface S, and depending on the weight, size, and the like of the gripping mechanism 100.

When a support length W1z, which is the Z-direction dimension of the static frame groove 102, is the same as the support length Wz, the above relationship is satisfied.

Here, as illustrated in (b) of FIG. 2, a state is maintained in which the leg portion 110 is accommodated in the columnar space having a rectangular cross section, which is formed by the static frame groove 102 and the dynamic frame groove 153 and extends in the Z direction. That is, the static divided leg portion 120 is accommodated inside the static frame groove 102, and the dynamic divided leg portion 130 is accommodated inside the dynamic frame groove 153. Further, the opening edge portions of the static frame groove 102 and the dynamic frame groove 153 on the sliding surfaces 101a and 151a are in contact with each other and are aligned with each other in the X direction.

Therefore, a state is maintained in which the leg portion 110 is regulated from moving in the X direction and the Y direction and is movable only in the Z direction.

Next, the transverse moving portion 150 is driven.

First, in the transverse movement drive unit 155 of the transverse moving portion 150, the pinion 155b is rotated by driving of the drive source 155a such as a motor. The meshing rack 155c is operated in the X direction by the rotation of the pinion 155b. By the operation of the rack 155c in the X direction, the connection portion 156 integrally connected to the rack 155c is operated in the X direction. By the operation of the connection portion 156 in the X direction, the transverse moving frame portion 151 integrally connected to the connection portion 156 moves in the X direction as illustrated in FIG. 3.

As the transverse moving frame portion 151 moves in the X direction, the plurality of dynamic divided leg portions 130 accommodated in the dynamic frame grooves 153 move in the X direction integrally with the transverse moving frame portion 151. The dynamic divided leg portion 130 moves in a direction away from the static divided leg portion 120 in the X direction. That is, the dynamic contact portion 132 moves away from the static contact portion 122 in the X direction. An X-direction separation distance between the dynamic contact portion 132 and the static contact portion 122 increases.

Here, the plurality of dynamic divided leg portions 130 move by the same distance Tx in the X direction. The plurality of dynamic divided leg portions 130 move simultaneously in the X direction. At this time, in the movement of the transverse moving frame portion 151 in the X direction, it is possible to maintain a state in which the operation of the dynamic divided leg portion 130 in the Z direction and the Y direction is not affected. That is, the plurality of dynamic divided leg portions 130 having different Z-direction positions simultaneously move in the X direction.

The distance Tx is set so as to maintain the following relationship with the arrangement pitch Px between the leg portions 110 in the X direction. This setting can be performed based on a rotation amount for rotating the pinion 155b.

For the arrangement pitch Px and the relative movement distance (distance) Tx, a value of a ratio Tx/Px can be in a range of

$$0 \le Tx/Px \le 0.45 \ (6/13.3).$$

Here, it is possible to set to

$$0 \le Tx \le 6 \ mm,$$

and

$$Px = 13.3 \ mm.$$

This range is an example of a case where the gripping mechanism is applied as a gripping mechanism provided at an arm tip end of a lunar surface exploration robot as will be described later. Other ranges are also possible depending on the uneven shape of the uneven surface S, and depending on the weight, size, and the like of the gripping mechanism 100.

After the dynamic divided leg portion 130 moves in the X direction, as illustrated in (b) of FIG. 3, the dynamic frame groove 153 and the static frame groove 102 are shifted in the X direction as viewed in the Y direction. Accordingly, after the movement of the dynamic divided leg portion 130 in the X direction, the divided sliding surface 131 is in contact with the divided sliding surface 121 and the sliding surface 101a. After movement of the dynamic divided leg portion 130 in the X direction, the divided sliding surface 121 is in contact with the divided sliding surface 131 and the sliding surface 151a.

At this time, since the divided sliding surface 131 is flush with the sliding surface 151a and the divided sliding surface 121 is flush with the sliding surface 101a, the movement of the divided sliding surface 131 and divided sliding surface 121 in the X direction is not hindered by the sliding surface 151a and the sliding surface 101a.

The divided sliding surface 131 moves in the X direction along the divided sliding surface 121 and the sliding surface 101a. Therefore, the dynamic divided leg portion 130 moves in the X direction along the divided sliding surface 121 and the sliding surface 101a. Accordingly, the dynamic divided leg portion 130 moves in the X direction without being displaced in the Y direction.

At the same time, when the dynamic divided leg portion 130 moves in the X direction, a distance in the X direction between the longitudinal regulation protrusion 192 and the longitudinal regulation recessed portion 191 of the longitudinal position regulation portion 190 decreases, and the longitudinal regulation protrusion 192 is inserted into any one of the plurality of longitudinal regulation recessed portions 191 in a facing Z-direction position. When the longitudinal regulation recessed portion 191 and the longitudinal regulation protrusion 192 engage with each other, the Z-direction position of the dynamic divided leg portion 130 is regulated with respect to the fixed frame portion 101A.

Accordingly, the plurality of leg portions 110 are held and the Z-direction positions thereof are maintained by the longitudinal position regulation portions 190 when the dynamic divided leg portion 130 moves in the X direction.

That is, the Z-direction position of the leg portion 110 can be maintained unless the dynamic divided leg portion 130 moved in the X direction is released to return to its original position.

At the same time, when the dynamic divided leg portion 130 moves in the X direction, the dynamic contact portion 132 and the static contact portion 122, of which the X-direction separation distance increases, come into contact with corresponding portions of the facing uneven surface S. Further, corresponding to the movement distance of the dynamic divided leg portion 130 in the X direction, both the dynamic contact portion 132 and the static contact portion 122 press contact portions of the uneven surface S.

At this time, the dynamic contact portion 132 and the static contact portion 122 are biased in the transverse direction by the transverse biasing portion 133 and the transverse biasing portion 123, respectively. When the dynamic contact portion 132 is in contact with the uneven surface S, the transverse biasing portion 133 absorbs the displacement of the dynamic contact portion 132 in the X direction. At the same time, the transverse biasing portion 133 causes the dynamic contact portion 132 to press the uneven surface S in the X direction to an extent that the uneven surface S can be griped.

A pressing force of the dynamic contact portion 132 varies depending on a longitudinal length Fz of the transverse biasing portion 133 and the distance Tx. Here, for the Z-direction length Fz of the transverse biasing portion 133 and the relative movement distance Tx of the dynamic divided leg portion 130 in the X direction, a value of a ratio Tx/Fz can be in a range of

$$0 \leq Tx/Fz \leq 0.4 \ (6/15).$$

Here, it is possible to set to

$$0 \leq Tx \leq 6 \ mm,$$

and

$$Fz = 15 \ mm.$$

This range is an example of a case where the gripping mechanism is applied as a gripping mechanism provided at an arm tip end of a lunar surface exploration robot as will be described later. Other ranges are also possible depending on the uneven shape of the uneven surface S, and depending on the weight, size, and the like of the gripping mechanism 100.

Further, an upper limit of the pressing force of the dynamic contact portion 132 is related to the longitudinal movable distance Kz affected by the support length Wz. Therefore, for the Z-direction length Fz and the longitudinal movable distance Kz, a value of ratio Kz/Fz can be in a range of

$$0 \leq Kz/Fz \leq 1.89 \ (28.3/15).$$

Here, it is possible to set to

$$0 \leq Kz \leq 28.3 \ mm,$$

and

$$Fz = 15 \ mm.$$

This range is an example of a case where the gripping mechanism is applied as a gripping mechanism provided at an arm tip end of a lunar surface exploration robot as will be described later. Other ranges are also possible depending on the uneven shape of the uneven surface S, and depending on the weight, size, and the like of the gripping mechanism 100.

The Z-direction length Fz of the transverse biasing portion 123 is also set to be equal to the Z-direction length Fz of the transverse biasing portion 133.

When the static contact portion 122 is in contact with the uneven surface S, the transverse biasing portion 123 absorbs the displacement of the static contact portion 122 in the X direction. At the same time, the transverse biasing portion 123 causes the static contact portion 122 to press the uneven surface S in the X direction to an extent that the uneven surface S can be griped.

Here, the plurality of leg portions 110 are arranged linearly in the X direction, and the dynamic contact portion 132 and the static contact portion 122 are arranged in the opposite directions in the X direction. Accordingly, gripping can be implemented in a manner of sandwiching a protrusion of the uneven surface S . Similarly, gripping can be implemented in a manner of stretching out a recessed portion of the uneven surface S. This is based on a fact that the pressing forces applied to the uneven surface S by the dynamic contact portion 132 and the static contact portion 122 act as substantially linear reaction forces. Z-direction distances between the dynamic contact portion 132 and the static contact portion 122 and the uneven surface S can be maintained without change.

At the same time, with the longitudinal position regulation portion 190, a distance between the gripping mechanism 100 and the uneven surface S does not change. The plurality of leg portions 110 are supported by the transverse moving frame portion 151 and the fixed frame portion 101A.

Accordingly, it is possible to firmly grip the uneven surface S so that a positional relationship between the gripping mechanism 100 and the uneven surface S does not change.

In order to release the uneven surface S from the grip of the gripping mechanism 100, the transverse movement drive unit 155 of the transverse moving portion 150 is driven. At this time, the drive source 155a is driven so that the pinion 155b is reversely rotated with respect to the driving for gripping.

The transverse moving frame portion 151 moves in a direction in which the dynamic contact portion 132 and the static contact portion 122 approach each other in the X direction. Accordingly, the dynamic contact portion 132 and the static contact portion 122 that are in contact with the uneven surface S separate from the uneven surface S. As illustrated in FIG. 2, the pressing force applied to the uneven surface S by the dynamic contact portion 132 and the static contact portion 122 is also released. The opening edge portions of the static frame groove 102 and the dynamic frame groove 153 on the sliding surfaces 101a and 151a come into contact with each other and are aligned with each other in the X direction. Accordingly, the regulation by the longitudinal position regulation portion 190 is released at the same time.

As a result, a change in distance is possible so that the dynamic contact portion 132 and the static contact portion 122 can be separated from the uneven surface S in the Z direction.

Next, the frame portion 101 is moved in the Z direction so as to be separated from the uneven surface S.

As the frame portion 101 moves, the tip end 110a of each leg portion 110 moves in the direction of approaching the transverse moving frame portion 151 by the biasing force of the longitudinal biasing portion 170.

In all the leg portions 110, the tip end 110a is separated from the uneven surface S. At this time, all the tip ends 110a are located at the same position in the Z direction.

Thus, the uneven surface S is completely released from the grip of the gripping mechanism 100.

According to the gripping mechanism 100 of the embodiment, a gripping state can be achieved simply by approaching in the Z direction to come into contact with the object to be gripped and driving a motor serving as the drive source 155a of the transverse moving portion 150. At this time, it is not necessary to perform control of visually recognizing or scanning the shape of the uneven surface S before the gripping operation that is the object to be gripped having an irregular shape, or calculating driving control or the like corresponding to the shape of the uneven surface S before the gripping operation. In addition, it is possible to securely grip the object to be griped.

When releasing the gripping state, it is sufficient to drive the motor serving as the drive source 155a of the transverse moving portion 150 and move the gripping mechanism 100 away from the object to be gripped in the Z direction.

Therefore, it is possible to reduce the size and weight of the gripping mechanism 100 with a simple configuration and to exhibit a reliable gripping capability.

At the same time, before the motor serving as the drive source 155a of the transverse moving portion 150 is driven, the uneven shape of the uneven surface S to be gripped can be estimated by comparing outputs from the respective longitudinal detection units 180 in the leg portions 110 corresponding to the Z-direction positions of the tip ends 110a that are brought close to the object to be gripped in the Z direction and come into contact with the object to be gripped.

Accordingly, it is possible to estimate the uneven shape of the uneven surface S without providing an optical detection mechanism, and to maintain a reliable gripping state.

Further, in the embodiment, in a case of using as a gripping mechanism of a climbing robot or the like, it is possible to achieve an effect of being applicable not only to estimation of a shape of an object to be gripped but also to construction of an environment map.

Although a configuration in which seven leg portions 110 are arranged in a row in the X direction is described in the embodiment, the number and the arrangement of the leg portion are not limited.

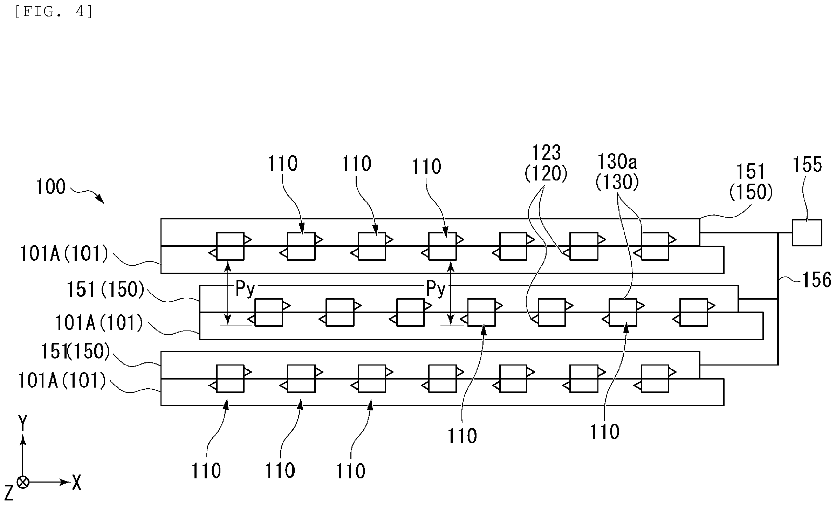

For example, in the invention, as illustrated in FIG. 4, it is also possible to adopt a gripping mechanism in which 21 leg portions 110 in total are arranged along the XY plane in three rows, each row including 7 leg portions 110. At this time, three rows of the plurality of leg portions 110 arranged in the X direction are arranged in parallel in the Y direction.

At this time, for an arrangement pitch Py of the leg portions 110 in the front-rear direction (Y direction) and the relative movement distance Tx of the dynamic divided leg portion 130 in the X direction, a value of a ratio Tx/Py can be in a range of

$$0 \leq Tx/Py \leq 0.45 \ (6/13.3).$$

Here, it is possible to set to

$$0 \leq Tx \leq 6 \ mm,$$

and

$$Py = 13.3 \ mm.$$

This range is an example of a case where the gripping mechanism is applied as a gripping mechanism provided at an arm tip end of a lunar surface exploration robot as will be described later. Other ranges are also possible depending on the uneven shape of the uneven surface S, and depending on the weight, size, and the like of the gripping mechanism 100.

Three transverse moving frame portions 151 are arranged in parallel, and may be connected to the transverse movement drive unit 155 by the connection portion 156 to reciprocate integrally in the X direction.

In this case, the number of leg portions increases, and as a result, the number of pairs of the static contact portion 122 and the dynamic contact portion 132 that come into contact with the uneven surface S increases, further leading to a plurality of straight lines the reaction force follows in holding the uneven surface S. Accordingly, gripping can be implemented in a manner of sandwiching a protrusion of the uneven surface S in each column. Similarly, gripping can be implemented in a manner of stretching out a recessed portion of the uneven surface S, and thus the reliability of gripping can be improved.

Alternatively, rows in which a plurality of leg portions 110 are arranged may be arranged in parallel and shifted in the X direction. In the example illustrated in FIG. 4, a row located at the center in the Y direction is shifted to the right side in the drawing as compared with upper and lower rows. Here, in a case of shifting a certain column, it is preferable that a shift X direction dimension is smaller than the relative movement distance (distance) Tx.

Further, in this configuration example, since the pitch in an X-axis direction is smaller as a whole than in the case of one row, it is possible to achieve an effect that the dynamic contact portion 132 and the static contact portion 122, which are pins, can be brought into contact with various portions of the uneven surface S.

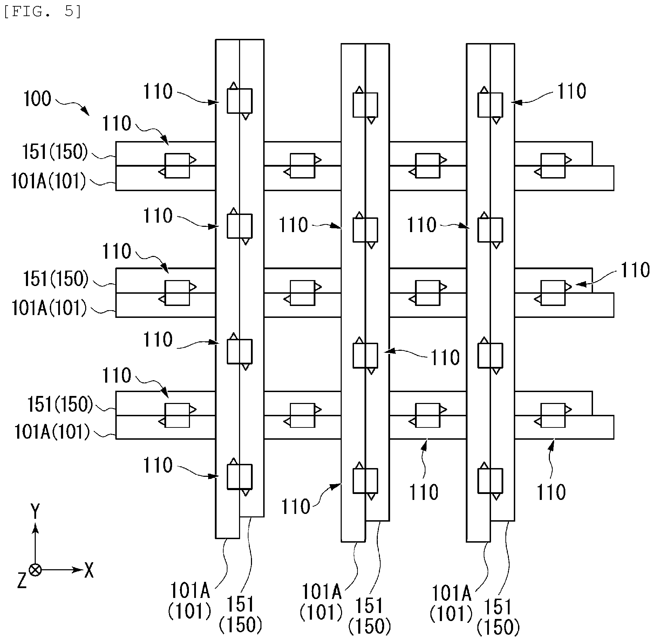

Further, as illustrated in FIG. 5, a configuration can be adopted in which arrangement rows of a plurality of leg portions 110 are arranged parallel to each other in the X direction and the Y direction.

In this case, in the example illustrated in FIG. 5, three transverse moving frame portions 151 extending in the X direction and three transverse moving frame portions 151 extending in the Y direction have different positions in the Z direction. Further, at positions where the respective transverse moving frame portions 151 intersect as viewed in the Z direction, the leg portions 110 may not be provided so as not to interfere with each other.

In the drawing, the illustration of some configurations is omitted.

According to this configuration example, gripping can be implemented in a manner of sandwiching a protrusion of the uneven surface S in each column. Similarly, gripping can be implemented in a manner of stretching out a recessed portion of the uneven surface S, and thus the reliability of gripping can be further improved.

Further, in this configuration example, an object that can not be gripped by a gripping mechanism in which the leg portions are arranged only in one direction as in the case of an arrangement in the related art can be gripped. For example, in a case of gripping a cylinder or a prism as an object to be gripped, if an axial direction of the object and the X-axis direction of the gripping mechanism are parallel to each other, it is not possible to grip the object with the arrangement in the related art, but it is possible to grip the object with the arrangement in the configuration example, which is the effect obtained.

Hereinafter, a second embodiment of the gripping mechanism according to the invention will be described with reference to the drawings.

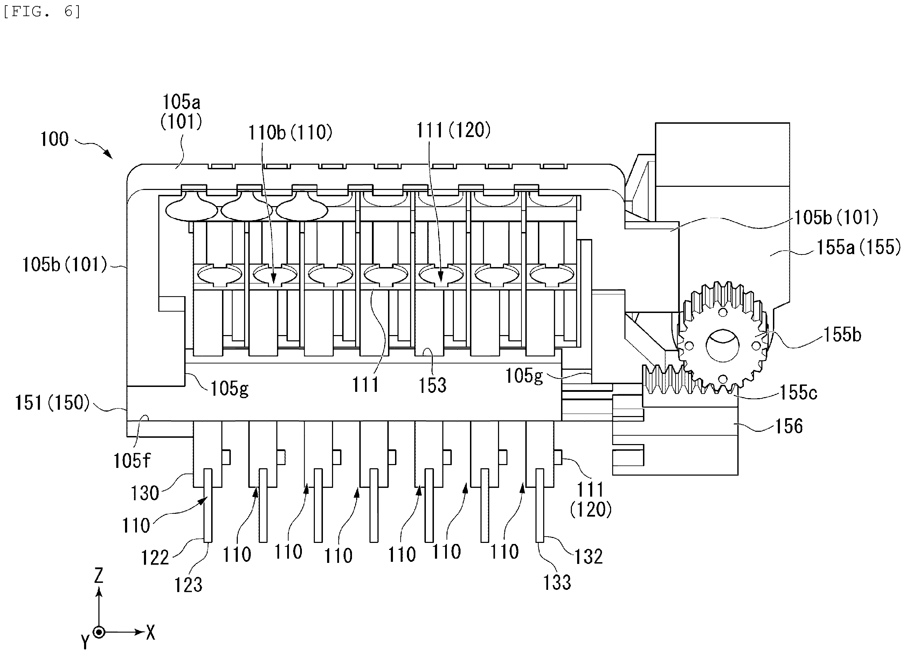

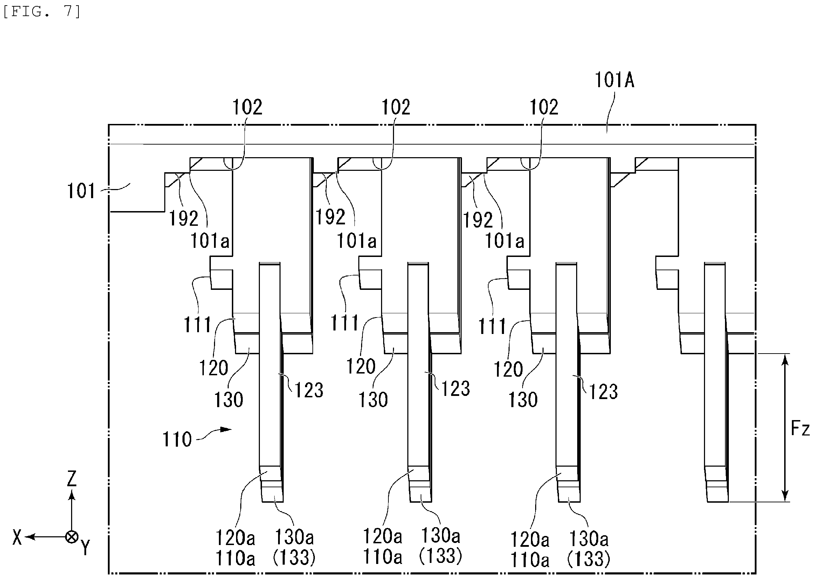

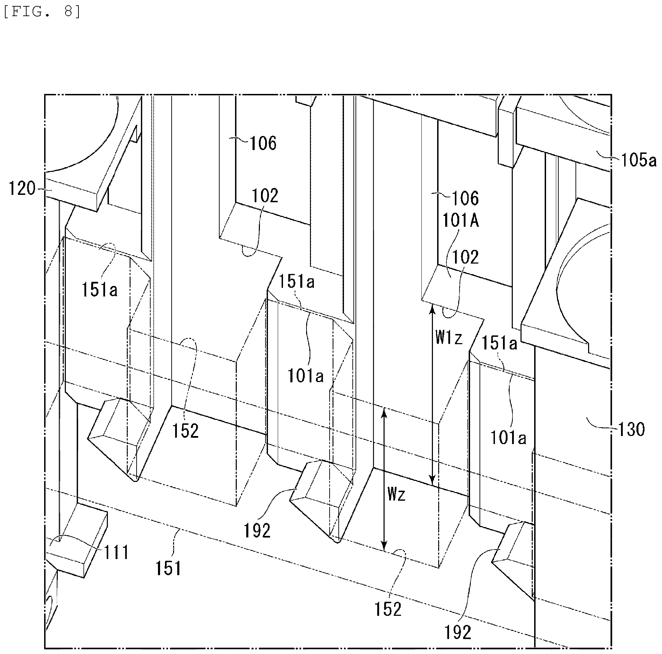

FIG. 6 is a perspective view of the gripping mechanism according to the embodiment as viewed from the front. FIG. 7 is a perspective view of the vicinity of a tip end of a leg portion of the gripping mechanism according to the embodiment as viewed from a rear side. FIG. 8 is a perspective view of the vicinity of a support groove 102 of a frame portion (support portion) 101.

The embodiment is different from the first embodiment in that a specific configuration is shown. Other configurations corresponding to those of the first embodiment described above are assigned the same reference signs and the description thereof is omitted.

In the gripping mechanism 100 of the embodiment, as illustrated in FIG. 6, the frame portion 101 includes an upper frame portion 105a, a sidewall frame portion 105b, a motor support portion 105d, and a support rail 106 in addition to the fixed frame portion 101A.

As the support portion 101 in the first embodiment, the upper frame portion 105a is close to the base end 110b of the leg portion 110 and supports the longitudinal detection unit 180. The upper frame portion 105a extends in the X direction. The sidewall frame portion 105b is formed at both ends of the upper frame portion 105a in the X direction so as to face the fixed frame portion 101A in the Z direction. The sidewall frame portion 105b extends in the Z direction and connects the upper frame portion 105a and the fixed frame portion 101A. The longitudinal biasing portion 170 extends in the Z direction between the upper frame portion 105a and the base end 110b of the leg portion 110.

As illustrated in FIGS. 7 and 8, the sliding surface 101a is formed in the fixed frame portion 101A, and can slide in contact with the transverse moving frame portion 151. A Z-direction dimension Wz of the fixed frame portion 101A is equal to or slightly smaller than a support length W1z of the sliding surface 101a. This is because, in the fixed frame portion 101A, the Z-direction dimension is larger than that of the transverse moving frame portion 151 correspondingly to a portion where the longitudinal regulation protrusion 192 of the longitudinal position regulation portion 190 is provided.

Both ends of the fixed frame portion 101A in the X direction are supported so as to be fitted into slide grooves 105f formed in the respective sidewall frame portions 105b. A moving direction of the fixed frame portion 101A is regulated in the X direction by the slide groove 105f. Further, in the sidewall frame portion 105b, a regulation portion 105g that restricts a movement range of the fixed frame portion 101A in the X direction is formed at a position close to the slide groove 105f. The fixed frame portion 101A is in contact with the regulation portion 105g, and thus its movement range in the X direction is regulated.

The motor support portion 105d protrudes to a side of the side wall frame portion 105b opposite to the leg portion 110. A motor serving as the drive source 155a of the transverse movement drive unit 155 is supported by the side wall frame portion 105b.

In the leg portion 110, as illustrated in FIGS. 7 and 8, the transverse biasing portion 123 and the transverse biasing portion 133 are formed in the vicinity of the tip end 110a. The transverse biasing portion 123 and the transverse biasing portion 133 have a smaller X-direction dimension than portions supported by the fixed frame portion 101A. The transverse biasing portion 123 and the transverse biasing portion 133 have a plate shape having a dimension Fz in the Z direction. The transverse biasing portion 123 and the transverse biasing portion 133 may be made of an elastic material such as polycarbonate resin, polyvinyl chloride, or a thin plate spring made of stainless steel.

As illustrated in FIGS. 7 and 8, the longitudinal regulation protrusion 192 of the longitudinal position regulation portion 190 is formed in the fixed frame portion 101A of the frame portion (support portion) 101 at a position closer to the tip end 110a than the transverse moving frame portion 151. The support rail 106 extending toward the upper frame portion 105a in the Z direction is formed in the fixed frame portion 101A at a position serving as a corner of the static frame groove 102. Both ends of the support rail 106 are connected to the fixed frame portion 101A and the upper frame portion 105a. The support rail 106 is formed to have an L-shaped cross section along the XY plane, and each surface is formed along an inner surface of the static frame groove 102. That is, the static divided leg portion 120 moves in the Z direction along the surface of the support rail 106. The support rail 106 improves the strength of the frame portion 101, and exhibits a Z-direction movement regulation ability for the static divided leg portion 120.

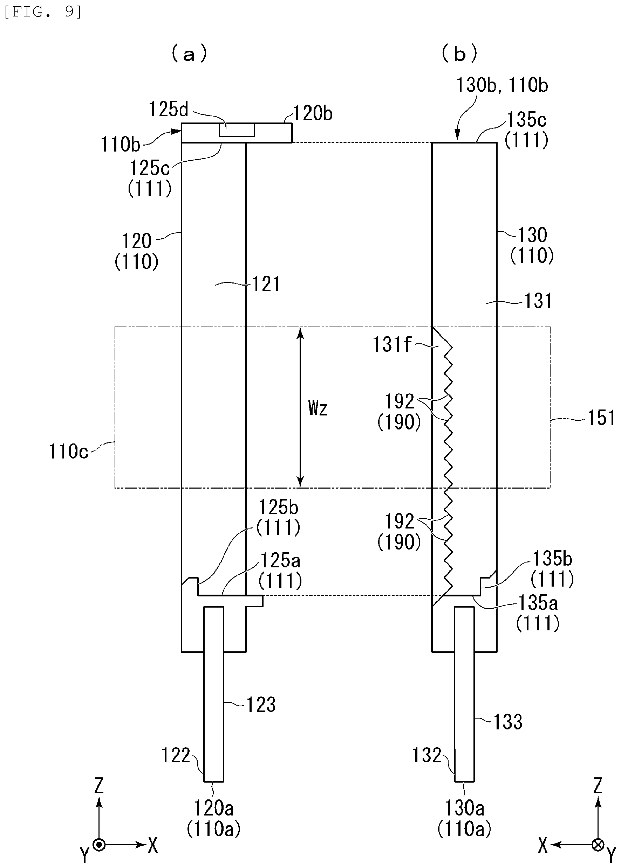

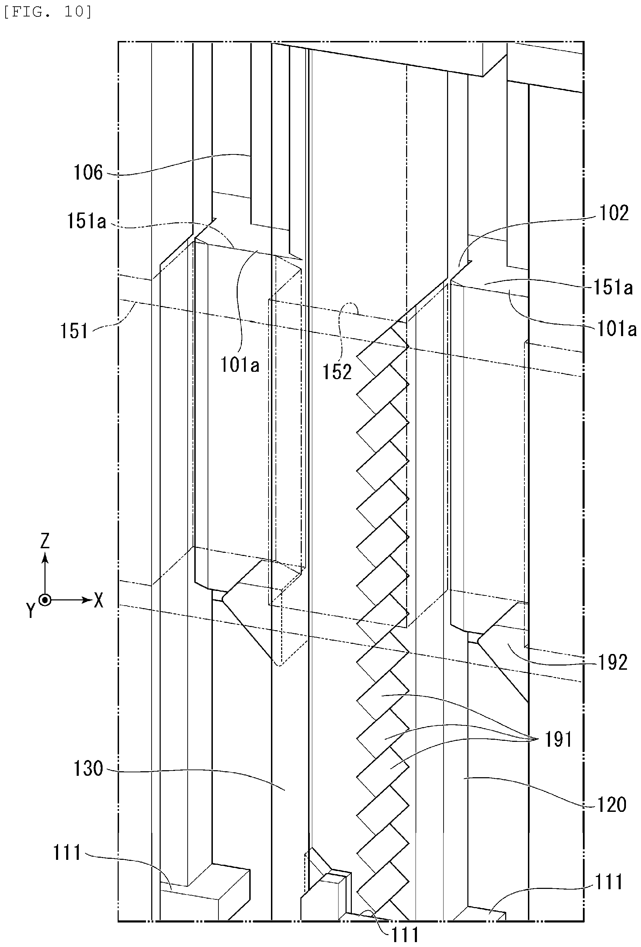

In FIG. 9, (a) is an exploded view of the static divided leg portion according to the embodiment as viewed from a front surface, and (b) is an exploded view of the dynamic divided leg portion as viewed from a rear surface. FIG. 10 is a partially see-through perspective view of the vicinity of the longitudinal position regulation portion according to the embodiment.

As illustrated in (a) of FIG. 9, the majority of the surface of the static divided leg portion 120 in a front direction is flush with the sliding surface 121. Further, at a position close to the tip end 110a, that is, a position closer to the base end 110b than the transverse biasing portion 123, the front-direction surface of the static divided leg portion 120 is formed with a transverse step (step) 125a protruding forward in the Y direction from the sliding surface 121. The transverse step 125a extends in the X direction. In X-direction end portions of the transverse step 125a, an end portion in a direction in which the dynamic divided leg portion 130 moving in the X direction approaches the static divided leg portion 120 is formed with a longitudinal step 125b facing the sliding surface 121 in the Z direction, with the same Y-direction dimension as the transverse step 125a.

The transverse biasing portion 123 is fitted in a portion of the static divided leg portion 120 that is closer to the tip end 120a than the transverse step 125a.

Further, at a position close to the base end 110b, the front-direction surface of the static divided leg portion 120 is formed with an upper step (step) 125c protruding forward in the Y direction with respect to the sliding surface 121. The upper step (step) 125c extends in the X direction. The transverse step 125a and the upper step (step) 125c are parallel to each other. The transverse step 125a, the longitudinal step 125b, and the upper step (step) 125c constitute the divided longitudinal position maintaining portion 111.

A portion 126 protruding forward in the Y direction from the upper step (step) 125c constitutes a base end (end portion) 120b serving as the base end 110b of the leg portion 110. A contour shape of the base end 120b of the static divided leg portion 120 along the XY plane is larger than an end portion shape of the longitudinal biasing portion 170 along the XY plane. A recessed portion 125d recessed in the Z direction is formed in the base end (end portion) 120b so that the end portion of the longitudinal biasing portion 170 is fitted.

As illustrated in (b) of FIG. 9, an end surface 135c of a base end 130b of the dynamic divided leg portion 130 is in contact with the upper step (step) 125c of the static divided leg portion 120. The end surface 135c extends along the XY plane.

The majority of the surface of the dynamic divided leg portion 130 in a rear direction is flush with the sliding surface 131. The sliding surface 131 is continuous up to the base end 130b in the Z direction. In the dynamic divided leg portion 130, a plurality of longitudinal regulation recessed portions 191 are formed at an end portion in a forward direction in which the dynamic divided leg portion 130 moving in the X direction is separated from the static divided leg portion 120. The longitudinal regulation recessed portion 191 is formed such that the step that is recessed forward in the Y direction with respect to the sliding surface 131 has a step surface that is bent in the X direction and the Z direction. A portion facing forward in the Y direction with respect to the longitudinal regulation recessed portion 191 is a surface 131f parallel to the sliding surface 131.

At a position close to the tip end 110a, that is, a position closer to the base end 110b than the transverse biasing portion 133, a rear-direction surface of the dynamic divided leg portion 130 is formed with a transverse step (step) 135a recessed forward in the Y direction with respect to the sliding surface 131. The transverse step 135a extends in the X direction. In X-direction end portions of the transverse step 135a, an end portion in a direction in which the dynamic divided leg portion 130 moving in the X direction away from the static divided leg portion 120 is formed with a longitudinal step 135b facing the sliding surface 131 in the Z direction, with the same Y-direction dimension as the transverse step 135a.

The transverse biasing portion 133 is fitted in a portion of the dynamic divided leg portion 130 that is closer to the tip end 130a than the transverse step 135a.

The transverse step 135a, the longitudinal step 135b, and the end surface 135c constitute the divided longitudinal position maintaining portion 111.

In the divided longitudinal position maintaining portion 111, the transverse step 125a is formed at a Z-direction position corresponding to the transverse step 135a. The transverse step 125a and the transverse step 135a are slidable in contact with each other.

The longitudinal step 125b corresponds to the longitudinal step 135b. The longitudinal step 125b and the longitudinal step 135b are configured such that when the dynamic divided leg portion 130 moves in the X direction to approach the static divided leg portion 120, the longitudinal step 125b and the longitudinal step 135b come into contact with each other so that the dynamic divided leg portion 130 cannot move further in the X direction relative to the static divided leg portion 120. The upper step (step) 125c and the end surface 135c are slidable in contact with each other.

In the divided longitudinal position maintaining portion 111, the transverse step 125a and the transverse step 135a as well as the upper step (step) 125c and the end surface 135c slide while maintained in contact with each other, and thus, even when the dynamic divided leg portion 130 and the static divided leg portion 120 move in the X direction, the Z-direction position of the dynamic divided leg portion 130 and the static divided leg portion 120 does not change.

As illustrated in (b) of FIG. 9 and FIG. 10, the longitudinal regulation recessed portion 191 is formed in a manner of being recessed in the X direction so as to engage with the longitudinal regulation protrusion 192 when the dynamic divided leg portion 130 moves in the X direction to be separated from the static divided leg portion 120. A plurality of longitudinal regulation recessed portions 191 are arranged in the Z direction. The longitudinal regulation recessed portion 191 is formed in a range in the Z direction corresponding to the longitudinal movable distance Kz.

At the longitudinal position regulation portion 190, when the dynamic divided leg portion 130 moves in the X direction, the longitudinal regulation protrusion 192 is inserted into any one of the plurality of longitudinal regulation recessed portions 191 depending on the Z-direction position of the leg portion 110. Accordingly, the longitudinal regulation recessed portion 191 and the longitudinal regulation protrusion 192 are engaged with each other, and the Z-direction position of the dynamic divided leg portion 130 is regulated with respect to the fixed frame portion 101A. In this state, as viewed in the Y direction, the leg portion 110 does not move in the Z direction until the dynamic divided leg portion 130 returns to its original position in the X direction so as to align with the static divided leg portion 120.

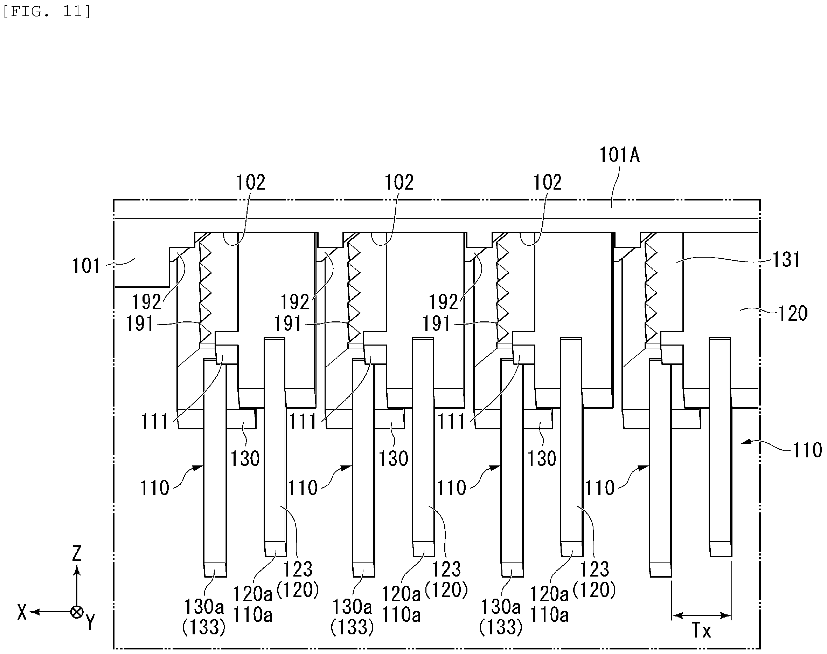

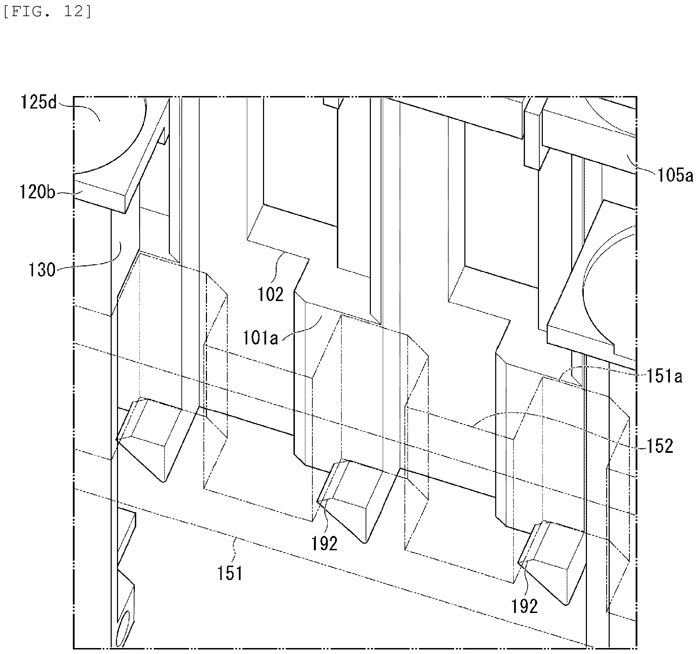

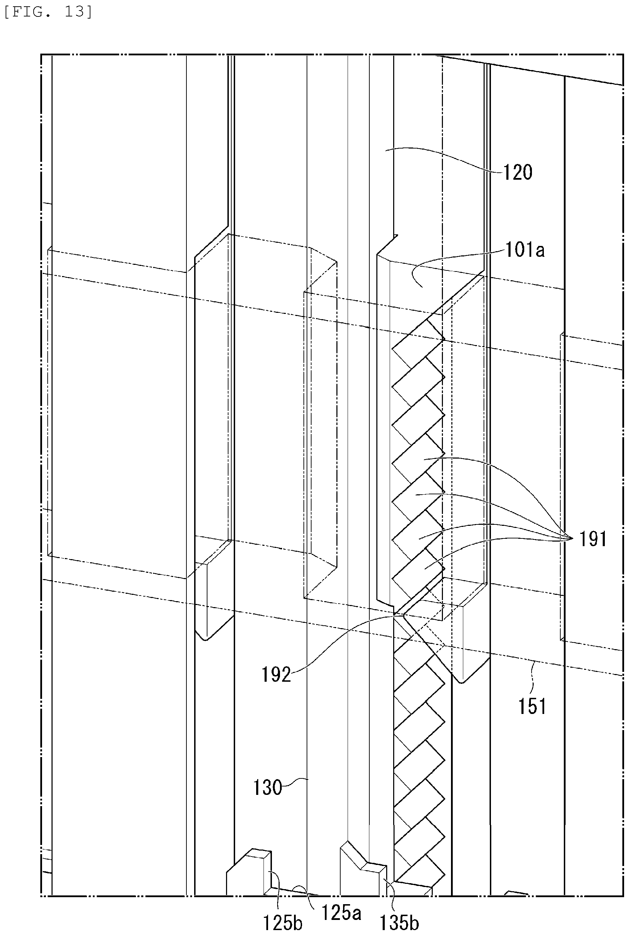

FIG. 11 is a perspective view of the vicinity of the tip end of the leg portion in a gripping state of the gripping mechanism according to the embodiment as viewed from a rear side. FIG. 12 is a perspective view of the vicinity of the support groove 102 of the frame portion (support portion) 101 in the gripping state. FIG. 13 is a partially see-through perspective view of the vicinity of the longitudinal position regulation portion in the gripping state according to the embodiment.

In the embodiment, as illustrated in FIGS. 11 to 13, in the gripping state, the longitudinal regulation protrusion 192 is inserted into any one of the plurality of longitudinal regulation recessed portions 191. Further, when the tip end 120a of the transverse biasing portion 123 and the tip end 130a of the transverse biasing portion 133 move by the relative movement distance Tx, the gripping is performed.

In the embodiment, the same effects as those of the above-described embodiment can be achieved.

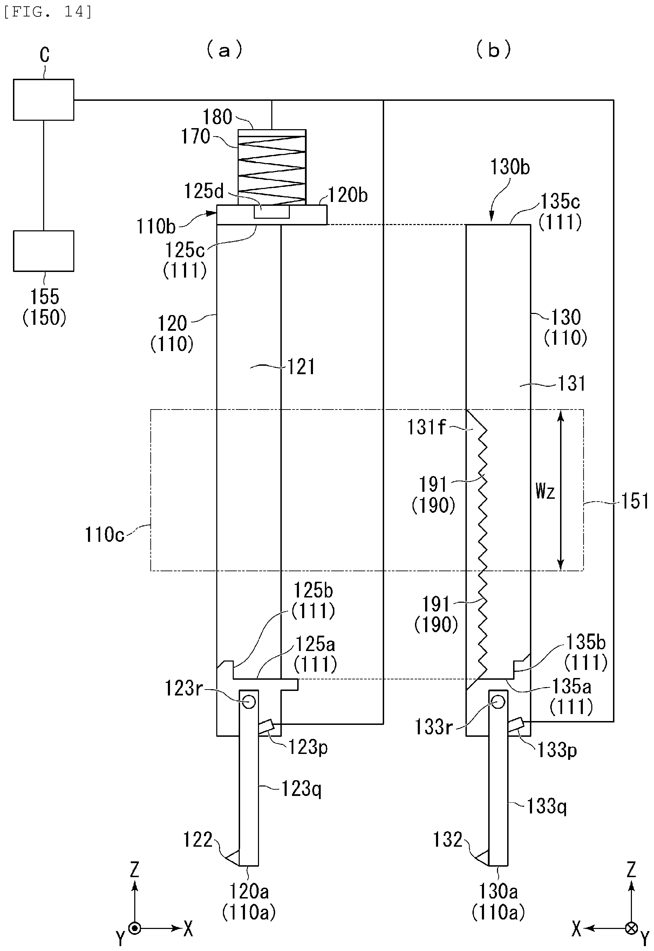

In FIG. 14, (a) is an exploded view of the static divided leg portion in another example according to the embodiment as viewed from a front surface, and (b) is an exploded view of the dynamic divided leg portion as viewed from a rear surface.

In the invention, as illustrated in FIG. 14, in the divided leg portions 120 and 130, the transverse biasing portions 123 and 133 may be implemented as a configuration in which rod-shaped tip end members 123q and 133q having rigidity, rotation shafts 123r and 133r for rotatably indicating base ends of the tip end members 123q and 133q, and actuators 122p and 133p for biasing the tip end members 123q and 133q are provided. At this time, a control unit C that controls the actuators 122p and 133p, the longitudinal biasing portion 170, and the transverse moving portion 150 may be provided.

Hereinafter, a robot according to a third embodiment of the invention will be described with reference to the drawings.

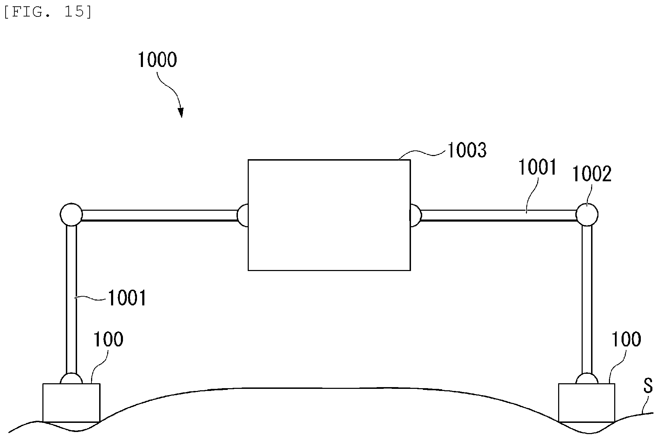

FIG. 15 is a schematic diagram illustrating a robot including a gripping mechanism according to the embodiment.

The embodiment is different from the first and second embodiments in that a gripping mechanism is provided in a robot. Other corresponding components are assigned the same reference signs and the description thereof is omitted.

In a robot 1000 according to the embodiment, as illustrated in FIG. 15, the gripping mechanism 100 can be provided at a tip end of an arm 1001 having a joint 1002. Accordingly, it is possible to grip firmly and release even the uneven surface S having an irregular shape repeatedly and hold a weight of a main body 1003. Accordingly, the multilegged robot 1000 can support an own weight including the main body 1003 and reliably perform a climbing operation.

The individual configurations in the above-described embodiments may be appropriately selected and combined separately.

\<Example\>

Hereinafter, an example of dimensions and the like in a case where the gripping mechanism described in the second embodiment is applied to a lunar surface probe or the like as an example according to the invention will be described.

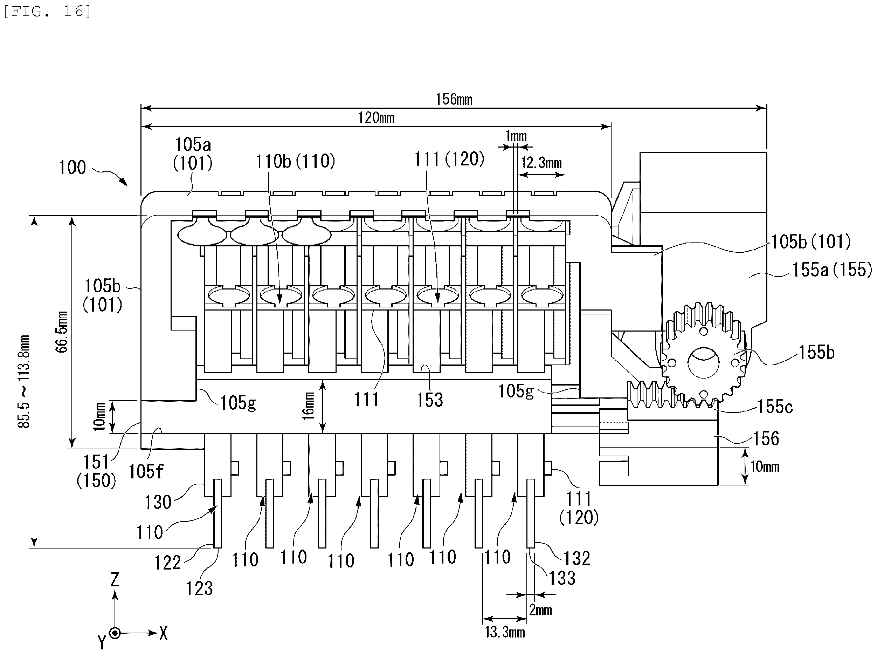

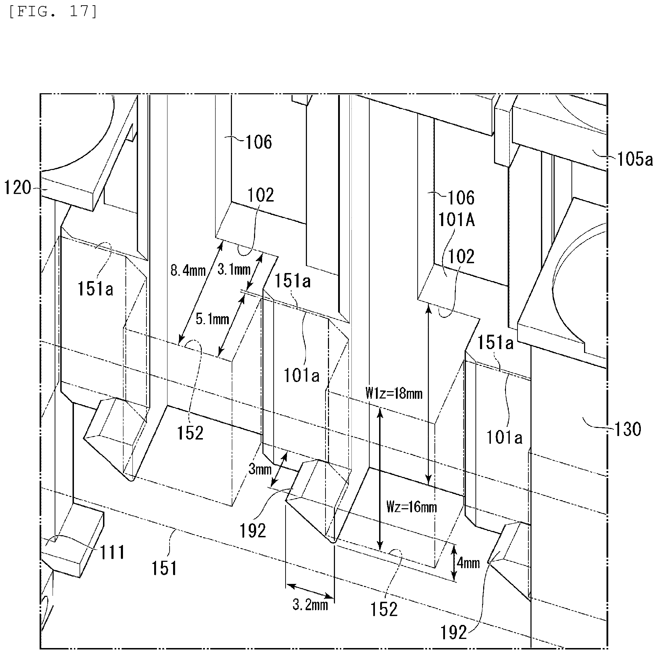

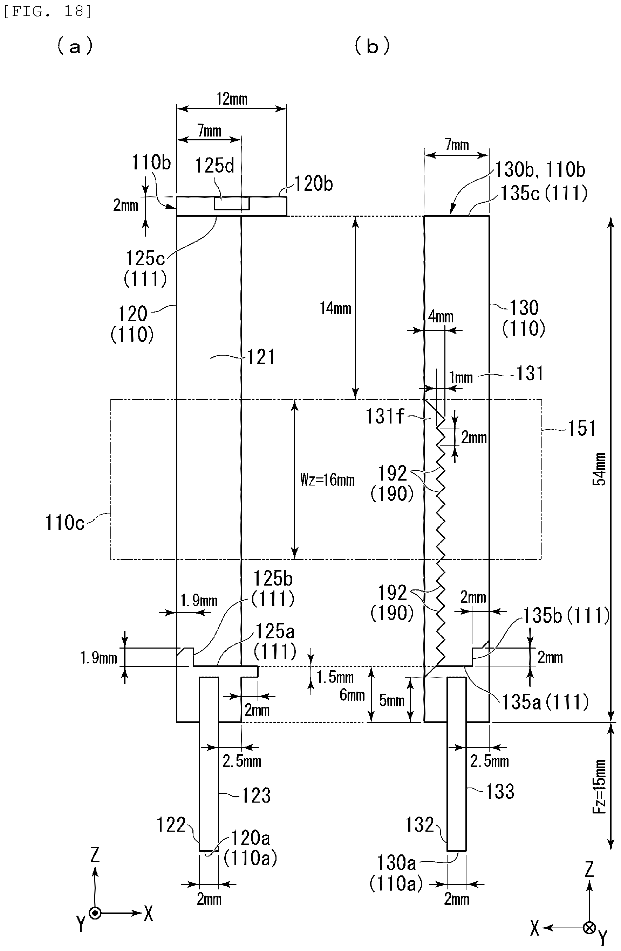

FIGS. 16 to 18 are diagrams illustrating actual dimensions of the gripping mechanism 100 of the second embodiment as an example of the invention.

A weight of the gripping mechanism is 200g to 400g.

In addition, the following items are listed again:

$$0 \leq Kz \leq 28.3 \text{ mm,}$$

$$Wz = 16 \text{ mm,}$$

$$Fz = 15 \text{ mm,}$$

$$0 \leq Tx \leq 6 \text{ mm,}$$

$$Px = 13.3 \text{ mm,}$$

and

$$Py = 14 \text{ mm}.$$

The material of the static divided leg portion 120 and the dynamic divided leg portion 130 is ABS resin.

The material of the static contact portion 122 and the dynamic contact portion 132 is an iron material or an SUS material.

The material of the transverse biasing portion 123 and the transverse biasing portion 133 is polycarbonate resin.

The material of the frame portion 101 is ABS resin.

The material of the transverse moving frame portion 151 is ABS resin.

The material of the fixed frame portion 101A is ABS resin.

The material of the pinion 155b is monomer-cast nylon.

The material of the rack 155c is ABS resin.

It was found that, with the configuration described in the above example, it was possible to suitably grip not only a protrusion but also a recessed portion on the uneven surface S imitating a lunar surface or the like. In addition, it was also found that it was possible to climb a surface at an angle close to being vertical. Further, it was found that it was possible to favorably hold the own weight of the robot such as a probe by the gripping mechanism even in the case of an uneven surface that was beyond being vertical like an overhanging lower surface.

Industrial Applicability

As an utilization example of the invention, handling of objects on a production line includes, for example,

- gripping metal or plastic parts, and
- gripping objects having an irregular shape such as finished products and agricultural products. In this case, it is conceivable that the gripping mechanism according to the invention is used as an end effector of a robot arm.

Further, handling of objects in the field includes, for example,

removal of debris and sampling at disaster sites, and sampling activities during exploration and investigation.

Further, utilization examples of serving as a robot leg include

- exploration of extreme environments and disaster relief operations, and
- landing and airframe support mechanisms in microgravity environments (in orbit, on the surface of an asteroid).

In addition, it is conceivable to adapt the invention to an outdoor infrastructure, a construction site, a moving body holding mechanism of an inspection work robot in a factory, and the like.

Reference Signs List

100: gripping mechanism
101: frame portion (support portion)
101a, 151a: sliding surface
101A: fixed frame portion
102: static frame groove (support groove)
110: leg portion
110a, 120a, 130a: tip end
110b, 120b, 130b: base end
110c: middle portion
111: divided longitudinal position maintaining portion
120: static divided leg portion (divided leg portion)
121, 131: divided sliding surface (sliding surface)
122: static contact portion (contact portion)
123, 133: transverse biasing portion
130: dynamic divided leg portion (divided leg portion)
132: dynamic contact portion (contact portion)
150: transverse moving portion
151: transverse moving frame portion
153: dynamic frame groove (support groove)
155: transverse movement drive unit
170: longitudinal biasing portion
180: longitudinal detection unit
190: longitudinal position regulation portion
191: longitudinal regulation recessed portion
192: longitudinal regulation protrusion

**Claims**

1. A gripping mechanism that takes an uneven surface having an irregular shape as an object to be gripped, the gripping mechanism comprising:

a plurality of leg portions extending in a longitudinal direction and arranged in a transverse direction intersecting the longitudinal direction; and
a support portion supporting each leg portion such that the leg portion is able to reciprocate independently in the longitudinal direction, wherein
the leg portion includes a set of divided leg portions that are divided in a front-rear direction intersecting the longitudinal direction and the transverse direction and that are adjacent to each other in the front-rear direction, and
the support portion includes

a transverse moving portion configured to relatively move each set of the divided leg portions in the transverse direction, and a longitudinal biasing portion configured to bias the leg portion in the longitudinal direction.

2. The gripping mechanism according to claim **1,** wherein
the transverse moving portion relatively moves each set of the divided leg portions in the transverse direction by a same distance in the plurality of leg portions.

3. The gripping mechanism according to claim **1,** wherein

the plurality of leg portions arranged in the transverse direction are arranged in a plurality of rows in the front-rear direction, and
the transverse moving portion relatively moves each row of the divided leg portions by a same distance in the transverse direction.

4. The gripping mechanism according to claim 1, wherein
the leg portion

includes a contact portion, which is possible to come into contact with an object to be gripped, at a position in the transverse direction at a tip end of the divided leg portion, and
is provided with a transverse biasing portion configured to bias the contact portion in the transverse direction.

5. The gripping mechanism according to claim 1, further comprising:
a longitudinal position regulation portion configured to regulate a longitudinal position of the leg portion when the divided leg portion is moved relatively in the transverse direction by the transverse moving portion.

6. A robot comprising:

the gripping mechanism according to any one of claims 1 to 5; and
an arm whose tip end is provided with the gripping mechanism.

[FIG. 1]

(a)

100

101

170 180   170   110   110 180   110   180

170
111
110b

110c   110c   110b   110c   111   110c

155
155a
155b
155c

156
110c 156

Wz

133   133   Fz   133   133   132

Px   Px

110a
122   133   132
123
122
110a
130a (130)
121
122 131

151
(150)
192
191
(190)
151
(150)

Fz
110a
133
Px
130a (130)
101a
102   132
110a
132
122   153 151a 131 132
153
110
122 121
122 131
130a (130)
121

X   Z   Y

(b)

155
151
(150)
156
101A (101)

120a (120)
Px
110
102   122

X   Y   Z

[FIG. 2]

EP 4 534 260 A1

[FIG. 3]

EP 4 534 260 A1

EP 4 534 260 A1

[FIG. 4]

[FIG. 5]

[FIG. 6]

EP 4 534 260 A1

[FIG. 7]

[FIG. 8]

EP 4 534 260 A1

[FIG. 9]

[FIG. 10]

[FIG. 11]

[FIG. 12]

[FIG. 13]

[FIG. 14]

[FIG. 15]

[FIG. 16]

[FIG. 17]

EP 4 534 260 A1

[FIG. 18]

(a)                                    (b)

## INTERNATIONAL SEARCH REPORT

International application No.

**PCT/JP2022/021947**

### A. CLASSIFICATION OF SUBJECT MATTER

***B25J 15/08***(2006.01)i
FI:  B25J15/08 P; B25J15/08 A

According to International Patent Classification (IPC) or to both national classification and IPC

### B. FIELDS SEARCHED

Minimum documentation searched (classification system followed by classification symbols)

B25J15/00-15/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 5957517 A (CHEN, Yu-Fu) 28 September 1999 (1999-09-28) column 2, line 35 to column 4, line 9, fig. 1-6 | 1-4, 6 |
| A | column 2, line 35 to column 4, line 9, fig. 1-6 | 5 |
| Y | JP 64-078782 A (TOSHIBA CORP.) 24 March 1989 (1989-03-24) fig. 1, 4-5 | 1-4, 6 |
| Y | JP 61-244485 A (OMRON TATEISI ELECTRONICS CO.) 30 October 1986 (1986-10-30) fig. 1, 3 | 1-4, 6 |
| Y | WO 2009/062461 A1 (HUSSLEIN, Manfred) 22 May 2009 (2009-05-22) fig. 1, 3 | 4, 6 |
| A | FR 2945468 A1 (SODEME) 19 November 2010 (2010-11-19) entire text, all drawings | 1-6 |
| A | WO 2016/045833 A1 (ROBERT BOSCH GMBH) 31 March 2016 (2016-03-31) entire text, all drawings | 1-6 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/021947**

### C.    DOCUMENTS CONSIDERED TO BE RELEVANT

| Category* | Citation of document, with indication, where appropriate, of the relevant passages | Relevant to claim No. |
|---|---|---|
| A | US 5988618 A (MATRIX GMBH SPANNSYSTEME UND PRODUKTIONSAUTOMATISIERUNG) 23 November 1999 (1999-11-23) entire text, all drawings | 1-6 |
| A | JP 08-503422 A (SEHRT, Friedhelm) 16 April 1996 (1996-04-16) entire text, all drawings | 1-6 |
| A | US 4609220 A (NATIONAL RESEARCH DEVELOPMENT CORPORATION) 02 September 1986 (1986-09-02) entire text, all drawings | 1-6 |
| A | US 3507404 A (POMPE, Wilhelmus Antonius Maria) 21 April 1970 (1970-04-21) entire text, all drawings | 1-6 |
| A | WO 2021/070575 A1 (PANASONIC INTELLECTUAL PROPERTY MANAGEMENT CO., LTD.) 15 April 2021 (2021-04-15) entire text, all drawings | 1-6 |

Form PCT/ISA/210 (second sheet) (January 2015)

**INTERNATIONAL SEARCH REPORT**
**Information on patent family members**

International application No.

**PCT/JP2022/021947**

| Patent document cited in search report | | | Publication date (day/month/year) | Patent family member(s) | | | Publication date (day/month/year) |
|---|---|---|---|---|---|---|---|
| US | 5957517 | A | 28 September 1999 | (Family: none) | | | |
| JP | 64-078782 | A | 24 March 1989 | (Family: none) | | | |
| JP | 61-244485 | A | 30 October 1986 | (Family: none) | | | |
| WO | 2009/062461 | A1 | 22 May 2009 | DE fig. 1, 3 | 102007055105 | A1 | |
| FR | 2945468 | A1 | 19 November 2010 | (Family: none) | | | |
| WO | 2016/045833 | A1 | 31 March 2016 | DE entire text, all drawings | 102014219381 | A1 | |
| US | 5988618 | A | 23 November 1999 | EP entire text, all drawings DE | 857544 19802320 | A2 A1 | |
| JP | 08-503422 | A | 16 April 1996 | US entire text, all drawings WO DE | 5688013 1994/012323 4339102 | A A2 A1 | |
| US | 4609220 | A | 02 September 1986 | GB entire text, all drawings EP | 2148239 146209 | A A1 | |
| US | 3507404 | A | 21 April 1970 | GB entire text, all drawings DE | 1153243 1301437 | A B | |
| WO | 2021/070575 | A1 | 15 April 2021 | CN entire text, all drawings | 114514097 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018173250 A

**Non-patent literature cited in the description**

- Hubrobo: a lightweight multi-limbed climbing robot for exploration in challenging terrain.. **UNO, K.** ; **TAKADA, N.** ; **OKAWARA, T.** ; **HAJI, K.** ; **CANDA-LOT, A.** ; **RIBEIRO, W. F.** ; **YOSHIDA, K.** 2020 IEEE-RAS 20th International Conference on Humanoid Robots (Humanoids). IEEE, July 2021, 209-215

- Passive Spine Gripper for Free-Climbing Robot in Extreme Terrain. **NAGAOKA, K.** ; **MINOTE, H.** ; **MARUYA, K.** ; **SHIRAI, Y.** ; **YOSHIDA, K.** ; **HAKA-MADA, T.** ; **SAWADA, H** ; **KUBOTA, T.** IEEE Robotics and Automation Letters.. IEEE, January 2018